# EUROPÄISCHE PATENTSCHRIFT

(11) **EP 4 408 599 B1**
(45) Veröffentlichungstag und Bekanntmachung des Hinweises auf die Patenterteilung: **05.11.2025**
(21) Anmeldenummer: 22789504.2
(22) Anmeldetag: 14.09.2022
(51) Int. Cl.: B22D 11/128, F16C 37/00, F16C 19/38, F16C 33/58

(54) **STEHLAGER UND PRODUKTIONSANLAGE MIT SOLCH EINEM STEHLAGER**
PEDESTAL BEARING AND PRODUCTION PLANT WITH SUCH A PEDESTAL BEARING
SUPPORT DE PALIER ET INSTALLATION DE PRODUCTION DOTÉE D'UN TEL SUPPORT DE PALIER

(30) Priorität: 29.09.2021 EP 21199895
(43) Veröffentlichungstag der Anmeldung: 07.08.2024
(73) Patentinhaber: Primetals Technologies Austria GmbH, 4031 Linz (AT)
(72) Erfinder: DIRNBERGER, Gregor, 4470 Enns (AT); HOHENBICHLER, Gerald, 4020 Linz (AT); WIMMER, Franz, 4752 Riedau (AT); ZEMNI, Marvin, 4641 Steinhaus (AT); POEPPL, Johann, 4202 Kirchschlag (AT)
(74) Vertreter: Metals@Linz
(86) Internationale Anmeldenummer: PCT/EP2022/075534
(87) Internationale Veröffentlichungsnummer: WO 2023/052129

(56) Entgegenhaltungen:
- WO-A1-2011/117383
- CN-A- 107 511 466
- CN-A- 110 000 354
- KR-A- 20140 022 171
- KR-B1- 101 420 635

## Beschreibung

Die Erfindung betrifft ein Stehlager zur Lagerung eines langsam laufenden Körpers, insbesondere einer Rolle, in einer Produktionsanlage, insbesondere einer Stranggießanlage, zur Herstellung eines Stranges gemäß Patentanspruch 1 und solch eine Produktionsanlage gemäß Patentanspruch 15.

Aus der AT 521218 A1 ist ein einteiliges Stehlager mit einem ungeteilten Stehlagergehäuse bekannt. Das Stehlagergehäuse weist eine Lageraufnahme und ein Kühlkanalsystem für ein Kühlmittel auf. Das Stehlager weist ein im Stehlagergehäuse angeordnetes Wälzlager auf. Das Wälzlager weist einen Wälzlageraußenring auf, wobei der Wälzlageraußenring ein integraler Bestandteil des Stehlagergehäuses ist. Das Kühlkanalsystem weist einen Kühlkanal auf, wobei der Kühlkanal außenseitig an dem Stehlagergehäuse geführt ist und durch einen Deckel nach außen hin abgedeckt ist.

Aus KR 2014 0022171 A eine Führungswalzenvorrichtung bekannt. Die Führungswalzenvorrichtung weist mehrere beabstandet zueinander angeordnete Stehlager auf.

Aus CN 107 511 466 A, CN 110 000 354 A und WO 2011/117383 A1 sind verschiedene Stranggussrollensätze bekannt.

Es ist Aufgabe der Erfindung, ein verbessertes Stehlager, insbesondere ein verbessert gekühltes Stehlager, und eine verbesserte Produktionsanlage mit solch einem Stehlager bereitzustellen.

Diese Aufgabe wird mittels eines Stehlagers gemäß Patentanspruch 1 und einer Produktionsanlage gemäß Patentanspruch 15 gelöst. Vorteilhafte Ausführungsformen sind in den abhängigen Ansprüchen angegeben.

Es wurde erkannt, dass ein verbessertes Stehlager zur Lagerung eines langsam laufenden Körpers in einer Produktionsanlage, insbesondere einer Stranggieß- oder einer Gieß-Walz-Verbundanlage, zur Herstellung eines Stranges bzw. eines Warmguts dadurch bereitgestellt werden kann, dass das Stehlager ein Stehlagergehäuse mit einer Lageraufnahme, ein Kühlkanalsystem mit wenigstens einem Kühlkanal, und ein in der Lageraufnahme angeordnetes Wälzlager mit einem Wälzlageraußenring aufweist. Die Lageraufnahme weist eine um die Drehachse umlaufende erste innere Umfangsseite auf, wobei das Stehlagergehäuse eine erste Anlagefläche aufweist, wobei das Stehlagergehäuse ausgebildet ist, eine Lagerkraft aus dem Wälzlageraußenring an die erste Anlagefläche zu übertragen. Die erste innere Umfangsseite der Lageraufnahme des Stehlagergehäuses begrenzt radial außen den Kühlkanal. Des Weiteren begrenzt der Wälzlageraußenring radial innen den Kühlkanal, wobei der Kühlkanal sich in Umfangsrichtung um die Drehachse erstreckt und ausgebildet ist, ein in den Kühlkanal zuführbares Kühlmittel zur Kühlung des Wälzlagers und/oder des Stehlagergehäuses zu führen.

Diese Ausgestaltung hat den Vorteil, dass das Stehlager besonders einfach ausgebildet ist. Ferner ist der Kühlkanal besonders nahe an dem Wälzlageraußenring angeordnet, sodass dadurch ein Schmiermittel des Wälzlagers besonders gut gekühlt wird. Dadurch kann eine Überhitzung des Schmiermittels des Wälzlagers beim Einsatz des Stehlagers in der Produktionsanlage zur Herstellung des Warmguts, insbesondere eines Brammenstrangs, vermieden werden. Insbesondere wird hierbei eine Überhitzung des Schmiermittels über eine kritische Temperatur und damit eine thermische Zersetzung des Schmiermittels vermieden.

Der Wälzlageraußenring kann drehfest mit dem Stehlagergehäuse verbunden sein; es wäre auch möglich, dass der Wälzlageraußenring gegenüber dem Stehlagergehäuse verdrehbar, beispielsweise über einen geringen Winkelbereich von bis zu 30°, verdrehbar ist. Insbesondere kann die Verbindung zwischen Wälzlageraußenring und Stehlager so gewählt sein, dass ein Mitwandern des Wälzlageraußenrings über die Laufzeit des Stehlagers möglich ist.

In einer weiteren Ausführungsform weist der Wälzlageraußenring an einer zweiten äußeren Umfangsseite einen zumindest abschnittsweise nutförmig ausgebildeten und sich in Umfangsrichtung erstreckenden Nutkanal auf. Der Nutkanal ist radial nach außen hin offen ausgebildet und begrenzt radial nach innen hin den Kühlkanal. Diese Ausgestaltung hat den Vorteil, dass mittels eines Fräsvorgangs besonders einfach der Nutkanal in den Wälzlageraußenring oder eingebracht werden kann.

In einer weiteren Ausführungsform weist das Stehlagergehäuse an der ersten inneren Umfangsseite einen zumindest abschnittsweise nutförmig ausgebildeten und sich in Umfangsrichtung erstreckenden Nutkanal auf. Der Nutkanal ist radial nach innen hin offen ausgebildet und begrenzt radial nach außen hin den Kühlkanal. Diese Ausgestaltung hat den Vorteil, dass der Nutkanal beispielsweise beim Gießen des Stehlagergehäuses mit hergestellt werden kann. Alternativ kann der Nutkanal auch mittels eines Fräsens in die erste innere Umfangsseite kostengünstig eingebracht werden.

Von besonderem Vorteil ist, wenn der Nutkanal zumindest abschnittsweise mäanderförmig oder ringförmig zwischen einer ersten Stirnseite des Wälzlageraußenrings und einer in axialer Richtung gegenüberliegend angeordneten zweiten Stirnseite des Wälzlageraußenrings ausgebildet ist. Dadurch kann eine besonders gute Wärmeaufnahme aus dem Wälzlageraußenring durch das Kühlmittel bereitgestellt werden, sodass eine besonders gute Kühlung des Wälzlagers sichergestellt ist.

In einer weiteren Ausführungsform weist der Nutkanal einen ersten Nutkanalabschnitt und einen mit dem ersten Nutkanalabschnitt fluidisch verbundenen zweiten Nutkanalabschnitt auf. Der erste Nutkanalabschnitt erstreckt sich in Umfangsrichtung um die Drehachse. Der zweite Nutkanalabschnitt erstreckt sich in Umfangsrichtung axial versetzt zu dem ersten Nutkanalabschnitt um die Drehachse. Der Wälzlageraußenring weist axial zwischen dem ersten Nutkanalabschnitt und dem zweiten Nutkanalabschnitt einen Steg auf. Der Steg liegt an der ersten inneren Umfangsseite der Lageraufnahme an. Diese Ausgestaltung hat den Vorteil, dass der Wälzlageraußenring besonders gut in der Lageraufnahme abgestützt wird.

In einer weiteren Ausführungsform weist der Nutkanal einen dritten Nutkanalabschnitt auf, wobei der erste Nutkanalabschnitt sich in Umfangsrichtung parallel zu dem zweiten Nutkanalabschnitt erstreckt. Der dritte Nutkanalabschnitt verbindet ein umfangsseitiges Ende des ersten Nutkanalabschnitts mit dem zweiten Nutkanalabschnitt. Diese Ausgestaltung hat den Vorteil, dass der Wälzlageraußenring über eine große axiale Breite besonders gut durch das in den beiden Nutkanalabschnitten geführte Kühlmittel gekühlt wird.

In einer weiteren Ausführungsform erstreckt sich der Kühlkanal über ein vordefiniertes erstes Winkelsegment um die Drehachse. In Umfangsrichtung schließt sich an den Kühlkanal ein Abstützbereich an. Der Abstützbereich erstreckt sich über ein vordefiniertes zweites Winkelsegment, wobei das zweite Winkelsegment kleiner als das erste Winkelsegment ist. Der Abstützbereich ist ausgebildet, eine Lagerkraft aus dem Wälzlager an dem Stehlagergehäuse abzustützen. Vorzugsweise liegen die erste innere Umfangsseite und die zweite äußere Umfangsseite im Abstützbereich im Wesentlichen vollflächig aneinander an. Dadurch wird eine geringe Flächenpressung auch bei einer hohen Lagerkraft im Abstützbereich erzielt, sodass eine ungewollte Verformung, beispielsweise ein (lokales) Fließen eines Werkstoffs des Wälzlageraußenrings oder des Stehlagergehäuses zuverlässig vermieden werden kann. Vorteilhafterweise ist die Lagerkraft überwiegend über den Abstützbereich auf das Stehlagergehäuse übertragbar, wobei die Lagerkraft ausgehend von der Drehachse auf den Abstützbereich während eines überwiegenden Großteils der Betriebszeit (größer 90 Prozent der Betriebszeit) gerichtet ist. Diese Ausgestaltung hat den Vorteil, dass die Lagerkraft im Wesentlichen über den Abstützbereich und nicht über den übrigen Bereich, in dem der Kühlkanal verläuft, abgestützt wird und dadurch eine Beschädigung beispielsweise des Stegs vermieden wird.

In einer weiteren Ausführungsform schließt das erste Winkelsegment einen Winkel von wenigstens einschließlich 140° bis einschließlich 330°, insbesondere von wenigstens einschließlich 180° bis einschließlich 300° um die Drehachse ein. Dadurch wird eine zuverlässige Kühlung des Wälzlagers sichergestellt.

Von besonderem Vorteil ist, wenn der Wälzlageraußenring einstückig und materialeinheitlich ausgebildet ist. Dadurch kann das Wälzlager besonders kostengünstig hergestellt werden und eine Anzahl von Montageschritten zur Montage des Stehlagers ist besonders gering.

In einer weiteren Ausführungsform weist der Wälzlageraußenring einen Zwischenring und einen Lagerring auf, wobei der Zwischenring hohlzylindrisch um die Drehachse ausgebildet ist und radial innen eine fünfte innere Umfangsseite und radial außen die zweite äußere Umfangsseite aufweist. Der Lagerring ist radial innenseitig zu dem Zwischenring angeordnet und liegt radial außen an der fünften inneren Umfangsseite des Lagerings an. Die zweiteilige Ausgestaltung des Wälzlageraußenrings hat den Vorteil, dass der Zwischenring besonders einfach und kostengünstig im Rahmen eines Drehverfahrens, beispielsweise aus einem Vergütungsstahl, hergestellt werden kann und auf eine aufwendige Oberflächenbearbeitung, insbesondere ein Härten der Oberflächen am Zwischenring, verzichtet werden kann.

In einer weiteren Ausführungsform weist der Zwischenring den sich von der zweiten äußeren Umfangsseite radial in Richtung der fünften inneren Umfangsseite erstreckenden Nutkanal auf. Diese Ausgestaltung hat den Vorteil, dass auf ein Einbringen des Nutkanals in den Lagerring, der beispielsweise gehärtet ist, verzichtet werden kann.

In einer weiteren Ausführungsform weist das Stehlager ein fünftes Dichtelement und eine an der zweiten äußeren Umfangsseite angeordnete erste Dichtnut auf, wobei die erste Dichtnut vollständig umlaufend um die Drehachse an der zweiten äußeren Umfangsseite ausgebildet ist. In der ersten Dichtnut ist zumindest abschnittsweise das fünfte Dichtelement angeordnet. Das fünfte Dichtelement liegt an der ersten inneren Umfangsseite und in der ersten Dichnut an und dichtet den Kühlkanal fluiddicht ab. Dadurch kann ein Vermischen des Schmiermittels, das beispielsweise ölbasierend oder fettbasierend ausgebildet ist, mit dem Kühlmittel, das beispielsweise wasserbasierend ist, vermieden werden. Dadurch wird eine zuverlässige Schmierung sichergestellt und eine Korrosion des Wälzlagers vermieden.

In einer weiteren Ausführungsform sind die erste Dichtnut und der Nutkanal an der ersten inneren Umfangsseite oder in der zweiten äußeren Umfangsseite ausgebildet. Dadurch ist der Bearbeitungsaufwand gering, da in einer Maschine die erste Dichtnut und der Nutkanal kurz hintereinander oder zeitgleich hergestellt werden können.

In einer weiteren Ausführungsform weist das Kühlkanalsystem einen in dem Stehlagergehäuse angeordneten Zuführkanal und einen in dem Stehlagergehäuse angeordneten Rücklaufkanal auf, wobei der Zuführkanal und der Rücklaufkanal versetzt zueinander jeweils in dem Kühlkanal münden, wobei das Kühlmittel mittels des Zuführkanal in den Kühlkanal zuführbar ist, wobei das Kühlmittel mittels des Rücklaufkanals aus dem Kühlkanal abführbar ist. Dadurch kann ein einfacher Anschluss an einen Kühlmittelkreislauf bereitgestellt werden.

Die Produktionsanlage, die insbesondere eine Gieß-Walz-Verbundanlage ist, ist zur Herstellung und/oder zum Transport eines heißen Warmguts, insbesondere eines warmgegossenen Brammenstrangs ausgebildet. Die Produktionsanlage weist ein Stehlager und eine Rolle mit einer umfangsseitig angeordneten Rollenfläche zur Führung, Stützung und/oder Umformung des Warmguts auf. Das Wälzlager lagert die Rolle drehbar um die Drehachse. Diese Ausgestaltung hat den Vorteil, dass durch die wälzlagernahe Kühlung ein Überhitzen des Wälzlagers verhindert wird und insbesondere die Rolle langsam laufend das Warmgut transportieren kann.

Nachfolgend wird die Erfindung anhand von Figuren näher erläutert. Dabei zeigen:
- FIG 1: eine schematische Darstellung einer Produktionsanlage zur Herstellung eines Warmguts;
- FIG 2: eine schematische Darstellung eines in FIG 1 markierten Ausschnitts A der Produktionsanlage;
- FIG 3: eine schematische perspektivische Darstellung eines Ausschnitts einer Strangführung der in Fig. 2 gezeigten Produktionsanlage;
- FIG 4: eine Seitenansicht auf ein in einer in FIG 3 markierten Blickrichtung B auf ein Stehlager der Produktionsanlage;
- FIG 5: eine Schnittansicht entlang eines in FIG 4 gezeigten Schnittverlaufs C-D durch das in FIG 4 gezeigte Stehlager der Produktionsanlage;
- FIG 6: eine perspektivische Darstellung eines Zwischenrings des in Fig. 3 und 4 gezeigten Stehlagers;
- FIG 7: eine Seitenansicht auf den in FIG 6 gezeigten Zwischenring;
- FIG 8: eine Abwicklung des in FIG 6 und 7 gezeigten Zwischenrings;
- FIG 9: eine Schnittansicht entlang eines in FIG 7 gezeigten Schnitts E-F des in FIG 7 gezeigten Zwischenrings;
- FIG 10: eine perspektivische Darstellung eines Stehlagergehäuses des Stehlagers;
- FIG 11: eine Schnittansicht entlang einer in FIG 10 gezeigten Schnittebene G-G durch das in FIG 10 gezeigte Stehlagergehäuse;
- FIG 12a: eine Schnittansicht entlang der in FIG 10 gezeigten Schnittebene G-G durch das Stehlager in teilmontiertem Zustand;
- FIG 12b: eine perspektivische Darstellung des in FIG 12a gezeigten Stehlagers;
- FIG 13a: eine perspektivische Darstellung eines Wälzlagers eines Stehlagers gemäß einer zweiten Ausführungsform;
- FIG 13b und FIG 13c: jeweils eine Seitenansicht auf das in FIG 13a gezeigte Wälzlager aus unterschiedlichen Richtungen;
- FIG 14: einen Längsschnitt durch das in FIG 13 gezeigte Wälzlager;
- FIG 15: eine Schnittansicht entlang der in FIG 4 gezeigten Schnittlinie C-D durch ein Stehlager gemäß einer dritten Ausführungsform.

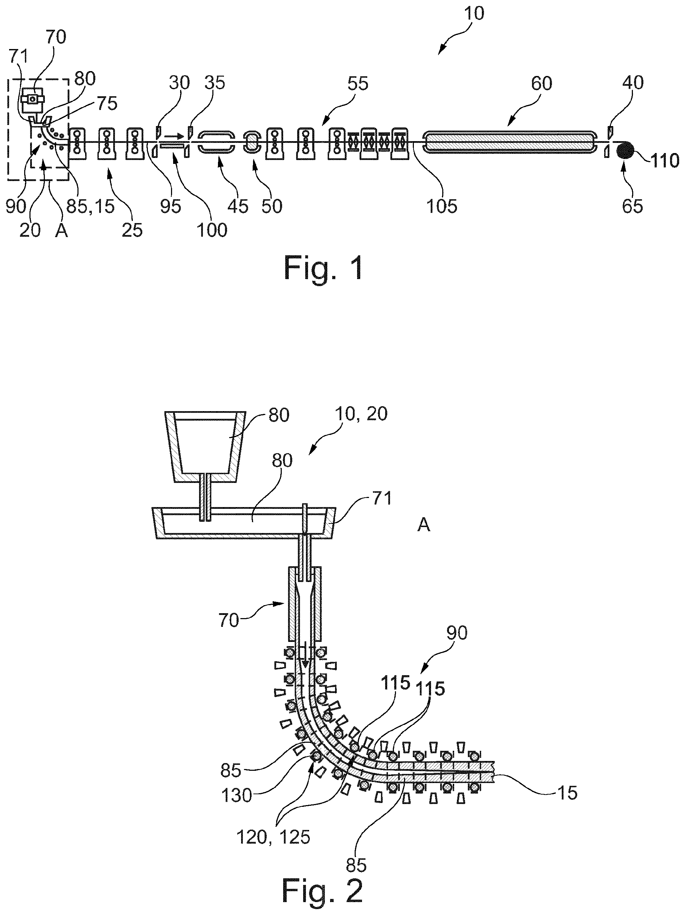

FIG 1 zeigt eine schematische Darstellung einer Produktionsanlage 10 zur Herstellung eines Warmguts 15.

Die Produktionsanlage 10 ist beispielhaft Gieß-Walz-Verbundanlage ausgebildet. Die Produktionsanlage 10 weist beispielsweise eine Stranggießmaschine 20, eine Vorwalzstraße 25, eine erste bis dritte Trenneinrichtung 30, 35, 40, eine Zwischenheizung 45, vorzugsweise einen Entzunderer 50, eine Fertigwalzstraße 55, eine Kühlstrecke 60 eine Haspeleinrichtung 65 und eine Strangführung 90 auf.

Die Stranggießmaschine 20 ist beispielhaft als Bogenstranggießmaschine ausgebildet. Die Stranggießmaschine 20 weist eine Pfanne 70, einen Verteiler 71, und eine Kokille 75 auf. Im Betrieb der Produktionsanlage 10 wird der Verteiler 71 mittels der Pfanne 70 mit einer metallischen Schmelze 80 befüllt. Die metallische Schmelze 80 kann beispielsweise mittels eines Konverters in einem Linz-Donawitz-Verfahren hergestellt werden. Die metallische Schmelze 80 kann beispielsweise Stahl aufweisen. In der Stranggießmaschine 20 wird die metallische Schmelze 80 zu einem teilerstarrten Brammenstrang 85, insbesondere einem Dünnbrammenstrang, vergossen. Der teilerstarrte Brammenstrang 85 wird aus der Kokille 75 gezogen und durch die Strangführung 90 bogenförmig in eine Horizontale umgelenkt, gestützt und erstarrt. Der Brammenstrang 85 wird in Förderrichtung von der Kokille 75 weggefördert.

Von besonderem Vorteil ist hierbei, wenn die Stranggießmaschine 20 den Brammenstrang 85 in einem Endlosstrang gießt. In einer Förderrichtung des Brammenstrangs 85 ist die Vorwalzstraße 25 der Stranggießmaschine 20 nachgeordnet. Dabei folgt in der Ausführungsform die Vorwalzstraße 25 direkt der Stranggießmaschine 20.Die Vorwalzstraße 25 kann mittels ein oder mehrerer Vorwalzgerüste den Brammenstrang 85 zu einem Vorwalzband 95 walzen.

Die erste und zweite Trenneinrichtung 30, 35 sind der Vorwalzstraße 25 bezogen auf die Förderrichtung des Vorwalzbands 95 nachgeordnet. Zum Transport des Vorwalzbands 95 zwischen dem Entzunderer 50 und der Vorwalzstraße 25 kann beispielsweise ein Rollentisch 100 der Strangführung 90 zwischen der Vorwalzstraße 25 und dem Entzunderer 50 angeordnet sein. Das Vorwalzband 95 wird mittels des Rollentischs 100 durch die erste und zweite Trenneinrichtung 30, 35 zum Entzunderer 50 geführt. In der Zwischenheizung 45 wird das Vorwalzband 95 beispielsweise auf eine Temperatur zwischen 850 °C und 1.050 °C erwärmt, bevor das Vorwalzband durch den Entzunderer 50 geführt wird. Im Entzunderer 50 wird das Vorwalzband 95 entzundert und anschließend der Fertigwalzstraße 55 zugeführt. In der Fertigwalzstraße 55 wird das Vorwalzband 95 beispielsweise von 25 bis 65 mm auf ein Fertigwalzband 105 fertiggewalzt. Das Fertigwalzband 105 kann eine Materialstärke von 0,8 bis 20 mm aufweisen. Das Fertigwalzband 105 wird aus der Fertigwalzstraße 55 in die Kühlstraße 60 weitergeführt und in der Kühlstraße 60 durch die Strangführung 90 auf eine Temperatur unterhalb von 450 °C abgekühlt. Nach Durchlaufen der dritten Trenneinrichtung 40 wird mittels der Haspeleinrichtung 65 das Fertigwalzband 105 zu einem Coil 110 aufgehaspelt. Ist der Coil 110 fertiggehaspelt, trennt die dritte Trenneinrichtung 40 das Fertigwalzband 105 ab.

Auch kann die Produktionsanlage 10 auf die Stranggießanlage reduziert sein, wobei die Stranggießanlage mittels der Stranggießmaschine einen Brammenstrang als Warmgut 15 aus der flüssigen metallischen Schmelze 80 herstellt.

FIG 2 zeigt eine schematische Darstellung eines in FIG 1 markierten Ausschnitts A der Produktionsanlage 10.

Die Strangführung 90 weist ein oder mehrere bezogen auf die Förderrichtung des Brammenstrangs 85 nebeneinander versetzt zueinander angeordnete Treibergerüste 115 auf. Jedes der Treibergerüste 115 weist wenigstens eine Rolle 120 und ein Stehlager 125 auf, wobei das Stehlager 125 die jeweils zugeordnete Rolle 120 um eine Drehachse 130 drehbar lagert. Vorzugsweise weist das Treibergerüst 115 ein Rollenpaar aus zwei gegenüber einander angeordneten Rollen 120 auf, die jeweils durch ein zugeordnetes Stehlager 125, insbesondere eine Anordnung von mehreren entlang der Drehachse 130 in axialer Richtung versetzt zueinander angeordneter Stehlagern 125, drehbar um die Drehachse 130 gelagert sind.

Sowohl die Rolle 120 als auch die Stehlager 125 sind in der Strangführung 90 des Brammenstrangs 85, der in der Strangführung 90 nur teilerstarrt ist, einer hohen thermischen Belastung ausgesetzt. Der Brammenstrang 85 weist in der Strangführung 90 etwa eine Temperatur zwischen 900 °C und 1.200 °C auf und erwärmt durch seine Wärme die Rolle 120, aber auch das Stehlager 125 stark. Eine Drehgeschwindigkeit der Rolle 120 ist ferner gering, sodass die Rolle 120 durch den Berührkontakt thermisch hoch belastet ist. Eine Drehzahl der Rolle 120 beträgt hierbei zwischen 0,2 und 5 Umdrehungen pro Minute.

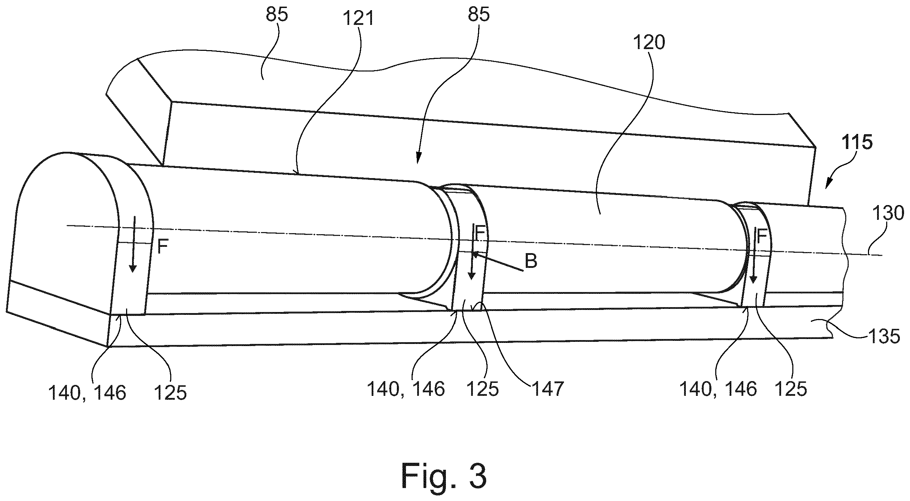

FIG 3 zeigt eine schematische perspektivische Darstellung eines Ausschnitts der Strangführung 90.

In der Ausführungsform ist die Rolle 120 an mehreren in axialer Richtung versetzt zueinander bezogen auf die Drehachse 130 angeordneten Stehlagern 125 angeordnet. Die Rolle 120 weist umfangsseitig eine Rollfläche 121 auf. Jedes der Stehlager 125 wird durch die Rolle 120 durchgriffen und stützt wenigstens eine Lagerkraft F aus der Führung, Umlenkung und/oder Querschnittsreduktion des Brammenstrangs 85 mittels der Rollfläche 121 über das Stehlager 125 an einem Segmentrahmen 135 des Treibergerüsts 115 ab. Der Segmentrahmen 135 ist beispielsweise derartig angeordnet, dass die Lagerkraft F im Wesentlichen senkrecht zu einer Befestigungsseite 140 des Stehlagers 125 angeordnet ist. Die Befestigungsseite 140 ist dabei auf der zum Brammenstrang 85 abgewandten Seite des Stehlagers 125 angeordnet.

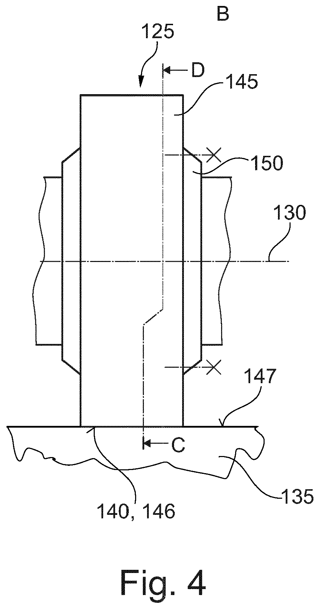

FIG 4 zeigt eine Seitenansicht auf das Stehlager 125 in einer in FIG 3 markierten Blickrichtung B auf das Stehlager 125.

Das Stehlager 125 weist beispielsweise ein Stehlagergehäuse 145 und einen ersten Gehäusedeckel 150 auf. Das Stehlagergehäuse 145 weist eine erste Anlagefläche 146 auf, die die Befestigungsseite 140 ausbildet. An der ersten Anlagefläche 146 kann das Stehlagergehäuse 145 an einer zweiten Anlagefläche 147 des Segmentrahmens 135 anliegen und vorzugsweise beispielsweise mittels einer Schraubverbindung befestigt sein. Die erste Anlagefläche 146 und/oder die zweite Anlagefläche 147 kann plan ausgebildet sein und sich parallel zu der Drehachse 130 erstrecken.

Stirnseitig ist der erste Gehäusedeckel 150 vorzugsweise reversibel lösbar an dem Stehlagergehäuse 145 befestigt. Das Stehlagergehäuse 145 kann gegossen oder brenngeschnitten, beispielsweise aus einem Stahlblock, hergestellt werden. Insbesondere kann das Stehlagergehäuse 145 einstückig und materialeinheitlich ausgebildet sein.

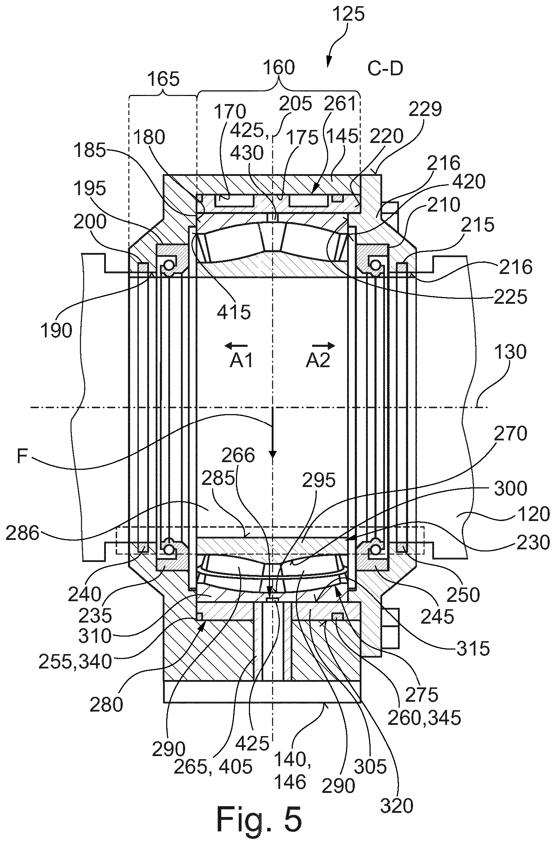

FIG 5 zeigt eine Schnittansicht entlang eines in FIG 4 gezeigten Schnittverlaufs C-D durch das in FIG 4 gezeigte Stehlager 125 der Produktionsanlage 10.

Das Stehlagergehäuse 145 weist einen Lagerabschnitt 160 und einen Deckelabschnitt 165 auf, wobei der Deckelabschnitt 165 sich an den Lagerabschnitt 160 in einer ersten Axialrichtung A1 bezogen auf die Drehachse 130 anschließt. Dabei ist der Deckelabschnitt 165 axial auf einer dem ersten Gehäusedeckel 150 abgewandten axialen Seite des Lagerabschnitts 160 angeordnet.

Der Lagerabschnitt 160 weist eine Lageraufnahme 175 auf. Die Lageraufnahme 175 weist eine erste innere Umfangsseite 170 auf, die radial nach außen hin die Lageraufnahme 175 begrenzt. Die erste innere Umfangsseite 170 ist vollständig umlaufend um die Drehachse 130 ausgebildet. Die Lageraufnahme 175 ist in radialer Richtung beispielsweise zylinderförmig um die Drehachse 130 ausgebildet. In der Ausführungsform ist in Umfangsrichtung die erste innere Umfangsseite 170 im Wesentlichen, vorzugsweise zu wenigstens 80 % einer Gesamtfläche der ersten inneren Umfangsseite 170 unterbrechungsfrei in Umfangsrichtung ausgebildet. Die Lageraufnahme 175 kann in dem Stehlagergehäuse 145 beispielsweise mittels Drehen oder Fräsen hergestellt werden.

Der Deckelabschnitt 165 erstreckt sich von dem Lagerabschnitt 160 in axialer Richtung weg. Ferner ist der Deckelabschnitt 165 in radialer Richtung schräg nach innen hin geführt. Der Deckelabschnitt 165 ist vorzugsweise stufig ausgebildet und begrenzt in der ersten Axialrichtung A1 die Lageraufnahme 175 mit einer ersten Absatzfläche 180 eines Absatzes 185. Die erste Absatzfläche 180 erstreckt sich vorzugsweise in einer Drehebene senkrecht zu der Drehachse 130.

In dem Deckelabschnitt 165 ist an einer zweiten inneren Umfangsseite 190 eine erste Dichtaufnahme 195 und eine in der ersten Axialrichtung A1 axial versetzt zu der ersten Dichtaufnahme 195 angeordnete zweite Dichtaufnahme 200 vorgesehen. In Axialrichtung ist die erste Dichtaufnahme 195 zwischen der Lageraufnahme 175 und der zweiten Dichtaufnahme 200 angeordnet.

Der erste Gehäusedeckel 150 ist im Wesentlichen spiegelsymmetrisch zu dem Deckelabschnitt 165 bezogen auf eine Symmetrieebene 205 ausgebildet, die senkrecht zu der Drehachse 130 ausgerichtet ist und etwa in mittiger Lage bezogen auf eine maximale Erstreckung der Lageraufnahme 175 ausgebildet ist. Der Deckelabschnitt 165 weist eine dritte Dichtaufnahme 210 und eine vierte Dichtaufnahme 215 an einer dritten inneren Umfangsseite 216 auf. Die vierte Dichtaufnahme 215 ist axial auf einer zur Lageraufnahme 175 in einer zweiten Axialrichtung A2, die entgegengesetzt zu der ersten Axialrichtung A1 verläuft, abgewandten Seite zu der dritten Dichtaufnahme 210 angeordnet.

Der erste Gehäusedeckel 150 ist axial gegenüberliegend zu dem Deckelabschnitt 165 an dem Lagerabschnitt 160 reversibel lösbar am Stehlagergehäuse 145 befestigt und ragt radial nach innen über die erste innere Umfangsseite 170 der Lageraufnahme 175. Der erste Gehäusedeckel 150 ist stirnseitig auf der zum Lagerabschnitt 160 zugewandten Axialseite gestuft ausgebildet und weist eine zweite Absatzfläche 220 und vorzugsweise eine dritte Absatzfläche 225 auf. Die zweite Absatzfläche 220 schließt sich in radialer Richtung an eine erste äußere Umfangsseite 229 des ersten Gehäusedeckels 150 in radialer Richtung an. Die zweite Absatzfläche 220 und die dritte Absatzfläche 225 sind auf der zur Lageraufnahme 175 zugewandten Stirnseite des ersten Gehäusedeckels 150 angeordnet. Die zweite Absatzfläche 220 ist gegenüber der dritten Absatzfläche 225 zurückversetzt angeordnet, sodass ein axialer Abstand zwischen der ersten Absatzfläche 180 und der zweiten Absatzfläche 220 größer ist als zwischen der ersten Absatzfläche 180 und der dritten Absatzfläche 225. Die dritte Absatzfläche 225 schließt sich in radialer Richtung nach innen hin an die zweite Absatzfläche 220 an. Die zweite Absatzfläche 220 und die dritte Absatzfläche 225 begrenzen in der Axialrichtung A2 die Lageraufnahme 175.

Das Stehlager 125 weist ferner ein Wälzlager 230, vorzugsweise ein erstes bis sechstes Dichtelement 235, 240, 245, 250, 255, 260 und ein Kühlkanalsystem 261. Zusätzlich kann das Stehlager ein Sicherungsmittel 265 und/oder ein Schmierkanalsystem 266 aufweisen. Das erste und dritte Dichtelement 235, 245 sind beispielhaft als Wellendichtring ausgebildet. Das zweite, vierte bis sechste Dichtelement 240, 250, 255, 260 sind beispielsweise als Dichtring mit einem kreisförmigen oder rechteckförmigen Querschnitt ausgebildet. Das erste Dichtelement 235 ist beispielsweise in der ersten Dichtaufnahme 195 und das zweite Dichtelement 240 ist in der zweiten Dichtaufnahme 200 des Deckelabschnitts 165 angeordnet. Dadurch wird die Lageraufnahme 175 in die erste Axialrichtung A1 mehrfach gedichtet und vor dem Eindringen von korrosiven Medien geschützt, insbesondere von Kühlwasser zur Kühlung des Brammenstrangs 85.

Das dritte Dichtelement 245 ist in der dritten Dichtaufnahme 210 und das vierte Dichtelement 250 ist in der vierten Dichtaufnahme 215 angeordnet, sodass auch in der zweiten Axialrichtung A2 die Lageraufnahme 175 vor dem Eindringen von korrosiven Medien, beispielsweise des Kühlwassers zur Kühlung des Brammenstrangs 85, geschützt ist.

Das Wälzlager 230 weist einen Wälzlagerinnenring 270, eine Wälzkörperanordnung 275 mit wenigstens einem Wälzkörper 290 und einen Wälzlageraußenring 280 auf. Der Wälzlagerinnenring 270 liegt mit einer vierten inneren Umfangsseite 285 an einem Lagerabschnitt 286 der Rolle 120 an. Über die vierte innere Umfangsseite 285 wird die Lagerkraft F aus dem Lagerabschnitt 286 der Rolle 120 in den Wälzlagerinnenring 270 übertragen

Der Wälzlagerinnenring 270 ist radial innenseitig zu der Wälzkörperanordnung 275 angeordnet. Die Wälzkörperanordnung 275 kann mehrere Wälzkörper 290 aufweisen, die beispielsweise tonnenförmig, kegelförmig oder kugelförmig ausgebildet sind. Radial außen zu der Wälzkörperanordnung 275 ist der Wälzlageraußenring 280 angeordnet. Der Wälzlageraußenring 280 weist radial innenseitig eine erste Lauffläche 295 auf. Der Wälzlagerinnenring 270 weist radial außenseitig eine zweite Lauffläche 300 auf, wobei zwischen der ersten Lauffläche 295 und der zweiten Lauffläche 300 die Wälzkörperanordnung 275 angeordnet ist. Auf der ersten und zweiten Lauffläche 295, 300 rollt der Wälzkörper 290 ab. Die Lagerkraft F wird von dem Wälzlagerinnenring 270 über die Wälzkörperanordnung 275 auf den Wälzlageraußenring 280 übertragen

Der Wälzlageraußenring 280 ist in der Ausführungsform beispielhaft zweiteilig ausgebildet. Dabei weist der Wälzlageraußenring 280 einen Zwischenring 305 und einen Lagerring 310 auf, wobei der Lagerring 310 die erste Lauffläche 295 aufweist und radial innenseitig zu dem Zwischenring 305 angeordnet ist. Der Zwischenring 305 umgreift den Lagerring 310 und liegt radial außenseitig an dem Lagerring 310 an. Insbesondere kann der Zwischenring 305 auf dem Lagerring 310 aufgeschrumpft sein. Der Zwischenring 305 kann beispielsweise einen Vergütungsstahl aufweisen.

Das Wälzlager 230 weist eine erste Stirnseite 415 und eine axial gegenüberliegend zu der ersten Stirnseite 415 angeordnete zweite Stirnseite 420 auf. Die erste Stirnseite 415 liegt an der ersten Absatzfläche 180 an. Die zweite Stirnseite 420 ist beispielhaft über dem Zwischenring 305 und dem Lagerring 310 gestuft ausgebildet. Dabei liegt die zweite Stirnseite 420 des Zwischenrings 305 an der zweiten Absatzfläche 220 und die zweite Stirnseite 420 des Lagerrings 310 an der dritten Absatzfläche 225 an. Dadurch ist der Wälzlageraußenring 280 in axialer Richtung fest in beide Axialrichtungen A1, A2 festgelegt.

In axialer Richtung ist der Lagerring 310 beispielhaft kürzer ausgebildet als der Zwischenring 305 sodass, wie in FIG 5 gezeigt, beispielhaft der Zwischenring 305 einseitig auf der zum ersten Gehäusedeckel 150 zugewandten zweiten Stirnseite 420 über den Lagerring 310 ragt, während hingegen der Zwischenring 305 und der Lagerring 310 auf der zum Deckelabschnitt 165 zugewandten ersten Stirnseite 415 bündig angeordnet sind.

Das Schmierkanalsystem 266 kann wenigstens einen Schmierversorgungskanal 425 für eine Schmiermittelzufuhr des Schmiermittels aufweisen. Der Schmierversorgungskanal 425 kann zumindest teilweise in Umfangsrichtung verlaufend radial außen nutförmig am Lagerring 310 ausgebildet sein. Radial außenseitig wird der Schmierversorgungskanal 425 durch den Zwischenring 305 verschlossen. Zusätzlich kann das Schmierkanalsystem 266 wenigstens eine vorzugsweise mehrere in Umfangsrichtung versetzt zueinander angeordnete und in radialer Richtung verlaufende Schmierdurchgangskanäle 430 aufweisen. Der Schmierdurchgangskanal 430 mündet radial innenseitig in einem Radialspalt zwischen der ersten Lauffläche 295 und der zweiten Lauffläche 300, in dem die Wälzkörperanordnung 275 angeordnet ist. Das Schmierkanalsystem 266 ist fluidisch mit einer nicht dargestellten Schmiermittelversorgung verbunden. Mittels des Schmierkanalsystems 266 wird ein Schmiermittel, das beispielsweise öl- oder fettbasiert ist, zur Schmierung der Wälzkörperanordnung 275 der Wälzkörperanordnung 275 von außen zugeführt.

Von besonderem Vorteil ist, wenn das Sicherungsmittel 265 beispielsweise röhrenförmig ausgebildet ist und einen Schmierzuführkanal 445 innenseitig umschließt. Der Schmierzuführkanal 445 mündet innenseitig am Schmierkanalsystem 266, insbesondere am Schmierversorgungskanal 425. Über den Schmierzuführkanal 445 kann das Schmiermittel von außen auf einfache Weise zugeführt werden. Ferner wird durch das Dichtmittel 406 ein Vermischen des Kühlmittels mit dem Schmiermittel und umgekehrt vermieden.

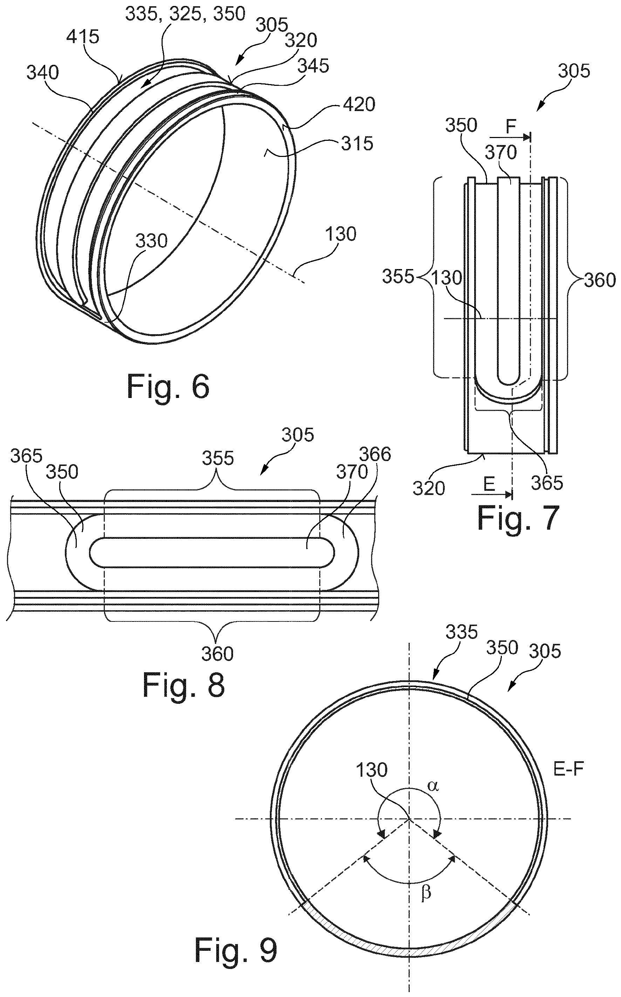

FIG 6 zeigt eine perspektivische Darstellung des Zwischenrings 305.

Eine fünfte innere Umfangsseite 315 des Zwischenrings 305 ist im Wesentlichen unterbrechungsfrei ausgebildet und verläuft zylinderförmig um die Drehachse 130. Eine zweite äußere Umfangsseite 320 des Wälzlageraußenrings 280, in Figur 6 beispielhaft des Zwischenrings 305, ist in einen Kühlbereich 335 und einen Abstützbereich 330 aufgeteilt. Über die zweite äußere Umfangsseite 320 wird die Lagerkraft F an die erste innere Umfangsseite 170 der Lageraufnahme 175 übertragen.

Das Kühlkanalsystem 261 weist einen Kühlkanal 325 auf, der in dem Kühlbereich 335 angeordnet ist. Im Kühlbereich 335 ist an der zweiten äußeren Umfangsseite 320 ein Nutkanal 350 zur Ausbildung des Kühlkanals 325 des Kühlkanalsystems 261 angeordnet. Der Nutkanal 350 ist in Axialrichtung beabstandet zwischen einer ersten Dichtnut 340 und einer zweiten Dichtnut 345 angeordnet. Die erste Dichtnut 340 und die zweite Dichtnut 345 sind vollständig umlaufend an der zweiten äußeren Umfangsseite 320 um die Drehachse 130 ausgebildet. Die erste Dichtnut 340 ist beispielsweise zu der ersten Stirnseite 415 des Zwischenrings 305 offen ausgebildet, während hingegen die zweite Dichtnut 345 beabstandet zu der zweiten Stirnseite 420 des Zwischenrings 305 angeordnet ist, die gegenüberliegend zu der ersten Stirnseite 415 angeordnet ist.

FIG 7 zeigt eine Seitenansicht auf den in FIG 6 gezeigten Zwischenring 305.

Der Nutkanal 350 ist radial nach außen hin offen. Der Zwischenring 305 ist vorzugsweise derart ausgestaltet, dass der Nutkanal 350 nicht bis zu der fünften inneren Umfangsseite 315 ragt, sondern durch Material des Zwischenrings 305 der Nutkanal 350 radial nach innen hin zur Drehachse 130 verschlossen ist.

Der Nutkanal 350 weist wenigstens einen ersten Nutkanalabschnitt 355, einen zweiten Nutkanalabschnitt 360 und wenigstens einen dritten Nutkanalabschnitt 365 auf. Zusätzlich kann der Nutkanal 350 einen vierten Nutkanalabschnitt 366 aufweisen, der in Figur 7 verdeckt ist. Der erste Nutkanalabschnitt 355 und der zweite Nutkanalabschnitt 360 sind in Axialrichtung beabstandet zueinander angeordnet, wobei ein Steg 370 sich zwischen dem ersten Nutkanalabschnitt 355 und dem zweiten Nutkanalabschnitt 360 radial nach außen hin erstreckt. Der Steg 370 weist in etwa beispielsweise die gleiche axiale Breite auf wie der erste Nutkanalabschnitt 355 und/oder der zweite Nutkanalabschnitt 360.

FIG 8 zeigt einen Ausschnitt einer Abwicklung des in FIG 6 und 7 gezeigten Zwischenrings 305.

Der erste Nutkanalabschnitt 355 und der zweite Nutkanalabschnitt 360 sind in einem ersten Endbereich über den dritten Nutkanalabschnitt 365 miteinander verbunden. Der dritte Nutkanalabschnitt 365 ist dabei bogenförmig ausgebildet und begrenzt in Umfangsrichtung den Steg 370.

Der erste Nutkanalabschnitt 355 und der zweite Nutkanalabschnitt 360 sind in einem zum ersten Endbereich in Umfangsrichtung gegenüberliegenden zweiten Endbereich über den vierten Nutkanalabschnitt 366 miteinander verbunden. Der vierte Nutkanalabschnitt 366 ist vorzugsweise bogenförmig ausgebildet und begrenzt in Umfangsrichtung den Steg 370 gegenüberliegend zum dritten Nutkanalabschnitt 365. Dadurch weist in der Abwicklung der Nutkanal 350 die Form eines flachgepressten Rings auf. Alternativ könnte beispielsweise auch der Nutkanal 350 meanderförmig zwischen der ersten Dichtnut 340 und der zweiten Dichtnut 345 geführt sein.

FIG 9 zeigt eine Schnittansicht entlang eines in FIG 7 gezeigten Schnitts E-F des in FIG 7 gezeigten Zwischenrings 305.

Der Nutkanal 350 und somit der Kühlbereich 335 erstrecken sich über ein erstes Winkelsegment α bezogen auf die Drehachse 130. Der Abstützbereich 330 erstreckt sich bezogen auf die Drehachse 130 über ein zweites Winkelsegment β und ist teilzylinderförmig um die Drehachse 130 verlaufend ausgebildet. Vorzugsweise wird auf Unterbrechungen durch Rillen oder Nuten in dem Abstützbereich 330 der zweiten äußeren Umfangsseite 320 verzichtet. Das erste Winkelsegment α schließt einen Winkel von wenigstens 180°, vorzugsweise 230° bis einschließlich 300° ein. Das zweite Winkelsegment β ergänzt das erste Winkelsegment α zu 360° und schließt sich in Umfangsrichtung an die jeweiligen Enden des Kühlbereichs 335 an.

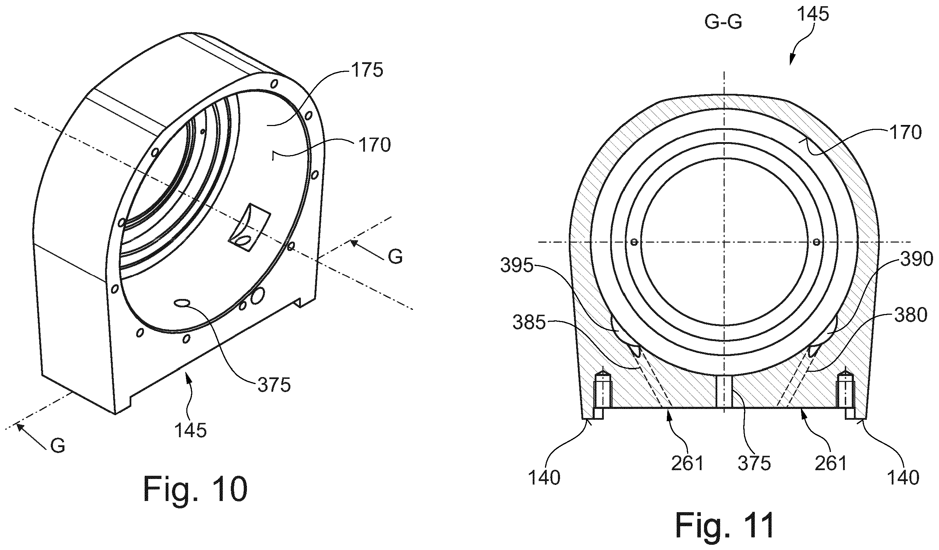

FIG 10 zeigt eine perspektivische Darstellung des Stehlagergehäuses 145.

Auf der zur Befestigungsseite 140 zugewandten Seite der Lageraufnahme 175 weist das Stehlagergehäuse 145 eine sich in radialer Richtung auf die Drehachse 130 zu erstreckende erste Durchgangsöffnung 375 auf, wobei die erste Durchgangsöffnung 375 an der ersten inneren Umfangsseite 170 der Lageraufnahme 175 mündet. Die erste Durchgangsöffnung 375 kann beispielsweise in Axialrichtung in etwa in mittiger Lage zu einer maximalen Erstreckung in Axialrichtung der Lageraufnahme 175 angeordnet sein.

FIG 11 zeigt eine Schnittansicht entlang einer in FIG 10 gezeigten Schnittebene G-G durch das in FIG 10 gezeigte Stehlagergehäuse 145.

In dem Stehlagergehäuse 145 sind auf der zur Befestigungsseite 140 zugewandten Seite jeweils beispielhaft ein Zuführkanal 380 und ein Rücklaufkanal 385 des Kühlkanalsystems 261 angeordnet, wobei der Zuführkanal 380 und der Rücklaufkanal 385 in Umfangsrichtung beabstandet zueinander angeordnet sind. In Umfangsrichtung kann die erste Durchgangsöffnung 375 zwischen dem Zuführkanal 380 und dem Rücklaufkanal 385 angeordnet sein. Der Zuführkanal 380 kann mit einer Kühlflüssigkeitszuführung und der Rücklaufkanal 385 kann mit einer Kühlflüssigkeitsrückführung eines Kühlsystems der Produktionsanlage 10 fluidisch verbunden sein.

Der Zuführkanal 380 erstreckt sich in radialer Richtung nach außen hin. Der Zuführkanal 380 und der Rücklaufkanal 385 sind beispielhaft schräg verlaufend im Stehlagergehäuse 145 angeordnet, wobei in Axialrichtung der Zuführkanal 380 und der Rücklaufkanal 385 beispielsweise in unterschiedlichen Axialrichtungen A1, A2 voneinander weg verlaufen. Der Zuführkanal 380 erstreckt sich somit in die zweite Axialrichtung A2 in Richtung des ersten Gehäusedeckels 150 und der Rücklaufkanal 385 beispielhaft in die erste Axialrichtung in Richtung des Deckelabschnitts 165.

An der ersten inneren Umfangsseite 170 mündet der Zuführkanal 380 beispielsweise in einem ersten Mündungsbereich 390 und der Rücklaufkanal 385 an einem zweiten Mündungsbereich 395. Der erste und zweite Mündungsbereich 390, 395 sind in Axialrichtung und Radialrichtung jeweils breiter ausgebildet als der am Mündungsbereich 390, 395 mündende Zuführkanal 380 bzw. Rücklaufkanal 385.

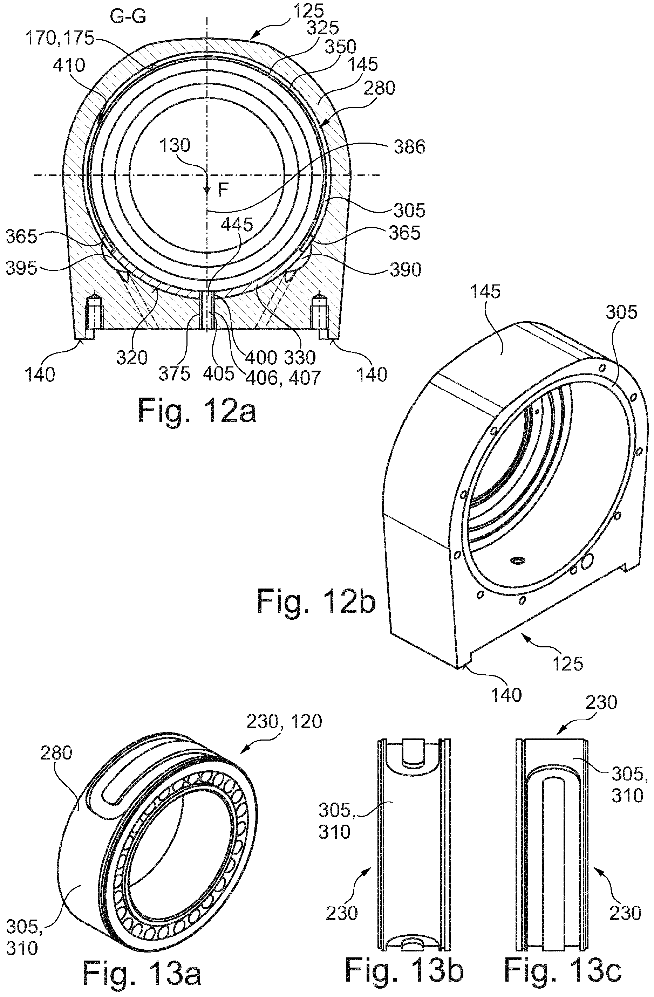

FIG 12a zeigt eine Schnittansicht entlang der in FIG 10 gezeigten Schnittebene G-G durch das Stehlager 125 in teilmontiertem Zustand. Figur 12b zeigt eine perspektivische Darstellung des in FIG 12a gezeigten Stehlagers 125.

In FIGN 12a, 12b ist in das Stehlagergehäuse 145 der Zwischenring 305 eingesetzt. Der Zwischenring 305 weist eine definierte Ausrichtung zu dem Stehlagergehäuse 145 auf. Dabei ist beispielswese der Abstützbereich 330 in Umfangsrichtung auf der zur Befestigungsseite 140 zugewandten Seite ausgerichtet. Insbesondere ist hierbei von Vorteil, wenn sich im Wesentlichen vollständig der Abstützbereich 330 in Umfangsrichtung zwischen dem ersten Mündungsbereich 390 und dem zweiten Mündungsbereich 395 erstreckt. Auch ist eine andere definierte Ausrichtung des Zwischenrings 305 zu dem Stehlagergehäuse 145, je nach Belastung des Zwischenrings 305 durch die Lagerkraft F möglich. Dabei ist vorzugsweise der Abstützbereich 330 derart in Umfangsrichtung angeordnet, dass eine Gerade 386 die mit einer Richtung der Lagerkraft F überlappt und die Drehachse 130 schneidet, durch den Abstützbereich 330 verläuft. Vorzugsweise ist der Abstützbereich 330 beidseitig, vorzugswiese mittig, zu der Geraden 386 angeordnet. Die Gerade 386 kann senkrecht oder geneigt vorzugsweise mit einem Winkel von 80° bis 110° zu dem Befestigungsbereich 140 ausgerichtet sein. Dabei ist von Vorteil, wenn im Wesentlichen die Lagerkraft F über den Abstützbereich 330 an die erste innere Umfangsseite 170 der Lageraufnahme 175 übertragen wird.

Beispielsweise kann in dem Zwischenring 305, beispielsweise im Abstützbereich 330 oder im Steg 370, eine zweite Durchgangsöffnung 400 angeordnet sein, die sich vollständig durch den Zwischenring 305 erstreckt. Die erste Durchgangsöffnung 375 und die zweite Durchgangsöffnung 400 sind dabei fluchtend zueinander ausgerichtet. In FIG 12a ist beispielsweise die zweite Durchgangsöffnung 400 in Umfangsrichtung in mittiger Lage zu einer maximalen Erstreckung des Abstützbereichs 330 und somit zwischen den jeweiligen Enden des Nutkanals 350 angeordnet.

Durch die fluchtende Anordnung der ersten und zweiten Durchgangsöffnung 375, 400 ist der erste Mündungsbereich 390 radial außen überlappend zu dem dritten Nutkanalabschnitt 365 und der zweite Mündungsbereich 395 in Umfangsrichtung gegenüberliegend zu dem vierten Nutkanalabschnitt 366 radial überlappend angeordnet.

Das Sicherungsmittel 265 ist länglich, beispielsweise zylinderförmig ausgebildet. In montiertem Zustand des Stehlagergehäuses 145 (vgl. FIG 5) ist in der ersten und zweiten Durchgangsöffnung 375, 400 das Sicherungsmittel 265angeordnet. Das Sicherungsmittel 265 legt zum einen die definierte Ausrichtung des Zwischenrings 305 relativ zu dem Stehlagergehäuse 145 fest, zum anderen verbindet das Sicherungsmittel 265 drehfest den Zwischenring 305 mit dem Stehlagergehäuse 145. Das Sicherungsmittel 265 kann beispielsweise in die erste und zweite Durchgangsöffnung 400, 405 stoffschlüssig und/oder formschlüssig und/oder kraftschlüssig befestigt sein. So kann beispielsweise eine Klebeschicht 406 vorgesehen sein, die umfangsseitig das Sicherungsmittel 265 umschließt. Die Klebeschicht 406 bildet dabei zusätzlich ein Dichtmittel 407 aus. Die Klebeschicht 406 hat den Vorteil, dass eine Dichtheit am Sicherungsmittel 265 gegenüber dem Kühlkanalsystem 261 am Sicherungsmittel 265 sichergestellt ist.

In eingebautem Zustand des Zwischenrings 305 wird der Kühlkanal 325 radial außen durch die erste innere Umfangsseite 170 der Lageraufnahme 175 radial außen begrenzt. Der Kühlkanal 325 wird (vgl. FIG 5) durch das in der ersten Dichtnut 340 angeordnete fünfte Dichtelement 255 und axial gegenüberliegend zum fünften Dichtelement 255 durch das in der zweiten Dichtnut 345 angeordnete sechste Dichtelement 260 abgedichtet. Das fünfte und sechste Dichtelement 340, 345 liegen jeweils an dem Zwischenring 305 und an der inneren Umfangsseite 170 dichtend an.

Um ein gutes Abrollen der Wälzkörper 290 an den Laufflächen 295, 300 und einen geringen Verschleiß der Wälzkörperanordnung 275 sicherzustellen, kann zumindest im Bereich der beiden Lauffläche 295, 300 das öl- oder fettbasiertes Schmiermittel angeordnet sein. Durch die beidseitige Abdichtung mittels des ersten bis vierten Dichtelements 235, 240, 245 250 wird eine Vermengung des Schmiermittels mit Kühlwasser zur Kühlung des Brammenstrangs 85 vermieden.

Zur Kühlung des Wälzlagers 230 wird über den Zuführkanal 380 ein Kühlmittel 410, beispielsweise Kühlwasser, zugeführt. Das Kühlmittel 410 wird von dem Kühlsystem bereitgestellt. Das Kühlmittel 410 strömt in den Zuführkanal 380 ein und strömt über den Zuführkanal 380 entlang zu dem ersten Mündungsbereich 390. Das Kühlmittel 410 strömt vom ersten Mündungsbereich 390 in den dritten Nutkanalabschnitt 365. Der dritte Nutkanalabschnitt 365 dient dabei als Verteiler und verteilt das zugeführte Kühlmittel 410 auf dem ersten Nutkanalabschnitt 360 und den zweiten Nutkanalabschnitt 365. Das Kühlmittel 410 strömt in Umfangsrichtung entlang des ersten und zweiten Nutkanalabschnitts 355, 360, bis es in Umfangsrichtung am anderen Ende des ersten und zweiten Nutkanalabschnitts 355, 360 angekommen ist. Der vierte Nutkanalabschnitt 366 dient beispielsweise als Zusammenführung und führt die beiden Ströme des Kühlmittels 410 zusammen. Das Kühlmittel 410 strömt vom vierten Nutkanalabschnitt 366 in den zweiten Mündungsbereich 395 und von dort wird das Kühlmittel 410 über den Rücklaufkanal 385 aus dem Stehlager 125 in einen Rücklauf des Kühlsystems abgeführt. Das Kühlmittel 410 nimmt in dem Stehlager 125 Wärme auf und kühlt das Stehlager 125. Insbesondere wird dabei besonders durch den radial innenliegenden Kühlkanal 325 das Wälzlager 230 gut gekühlt und vor eine Überhitzung geschützt.

Durch die Abdichtung des Kühlkanals 325 durch das fünfte und sechste Dichtelement 255, 260 in der ersten und zweiten Dichtnut 340, 345 wird ein Austritt des Kühlmittels 410 aus der Lageraufnahme 175 in Richtung der Wälzkörperanordnung 275 und eine Vermengung des Kühlmittels 410 mit dem Schmiermittel verhindert. Dadurch wird zum einen eine zuverlässige Kühlung des Wälzlagers 230 sichergestellt, zum anderen wird eine Korrosion oder ein Schmierverlust des Wälzlagers 230, insbesondere der Wälzkörperanordnung 275, verhindert. Dadurch wird eine hohe Lebensdauer des Wälzlagers 230 auch bei den heißen Umgebungstemperaturen, in denen das Stehlager 125 eingesetzt ist, um die Rolle 120 zu lagern, sichergestellt. Insbesondere wird durch die gute Kühlung mittels des weiteren Kühlmittels 410 eine Degeneration des Schmiermittels verhindert. So kann auch bei Umgebungstemperaturen von 5 °C bis 600 °C für das Stehlager 125 und einer geringen Drehzahl der Rolle 120 von 0,5 Umdrehungen pro Minute bis 10 Umdrehungen pro Minute die Abstützung der Lagerkraft F sichergestellt werden.

Durch die definierte Ausrichtung des Abstützbereichs 330 zu der Lagerkraft F wird eine zuverlässige Abstützung der Lagerkraft F aus der Rolle 120 über das Wälzlager 230, insbesondere über den Zwischenring 305 an die erste innere Umfangsseite 170 des Stehlagergehäuses 145, sichergestellt. Dadurch, dass auf die Anordnung des Kühlkanals 325 in dem Abstützbereich 330 verzichtet wird, kann eine Flächenpressung an der zweiten äußeren Umfangsseite 320 im Abstützbereich 330 und an der dem Abstützbereich 330 anliegenden ersten inneren Umfangsseite 170 geringgehalten werden. Dadurch wird eine mechanische Überlastung des Stegs 370 durch die Lagerkraft F vermieden. Die Lagerkraft F wird vom Stehlagergehäuse 145 direkt - unter Umgehung des ersten Gehäusedeckels 150 - an die erste Anlagefläche 146 übertragen und über die erste Anlagefläche 146 an der zweiten Anlagefläche 147 an dem Segmentrahmen 135 abgestützt.

Ferner kann der Zwischenring 305 beispielsweise als Drehteil hergestellt werden und der Nutkanal 350 in die zweite äußere Umfangsseite 320 eingefräst werden, sodass der Zwischenring 305 besonders einfach und kostengünstig hergestellt werden kann. In Verbindung mit dem Lagerring 310 kann der Zwischenring 305 den Wälzlageraußenring 280 auf einfache Weise ausbilden. Dadurch kann auf eine aufwendige Bearbeitung des Lagerrings 310, der zumindest an der ersten Lauffläche 295 gehärtet ist, verzichtet werden.

Ferner ist die Montage des Wälzlagers 230 und die definierte Ausrichtung des Wälzlagers 230 zu zum Stehlagergehäuse 145 besonders einfach.

FIG 13a zeigt eine perspektivische Darstellung des Wälzlagers 230 eines Stehlagers 125 gemäß einer zweiten Ausführungsform. FIG 13b und FIG 13c zeigen jeweils eine Seitenansicht auf das in FIG 13a gezeigte Wälzlager 230 aus unterschiedlichen Richtungen.

Aus Übersichtlichkeitsgründen wird in den FIGN 13a bis 13c auf die Darstellung des Stehlagergehäuses 145 verzichtet.

Das Stehlager 125 ist im Wesentlichen identisch zu dem in den FIGN 1 bis 12 beschrieben Stehlager 125 gemäß der ersten Ausführungsform ausgebildet. Im Folgenden wird ausschließlich auf die Unterschiede des in FIGN 13a bis 13c gezeigten Stehlagers 125 gemäß der zweiten Ausführungsform gegenüber dem in den FIGN 1 bis 12 gezeigten Stehlager 125 gemäß der ersten Ausführungsform eingegangen. Das in FIGN 13a bis 13c gezeigte Wälzlager 230 weist einen einstückig und materialeinheitlich ausgebildeten Wälzlageraußenring 280 auf. Dabei sind der Lagerring 310 und der Zwischenring 305 zusammen ausgebildet.

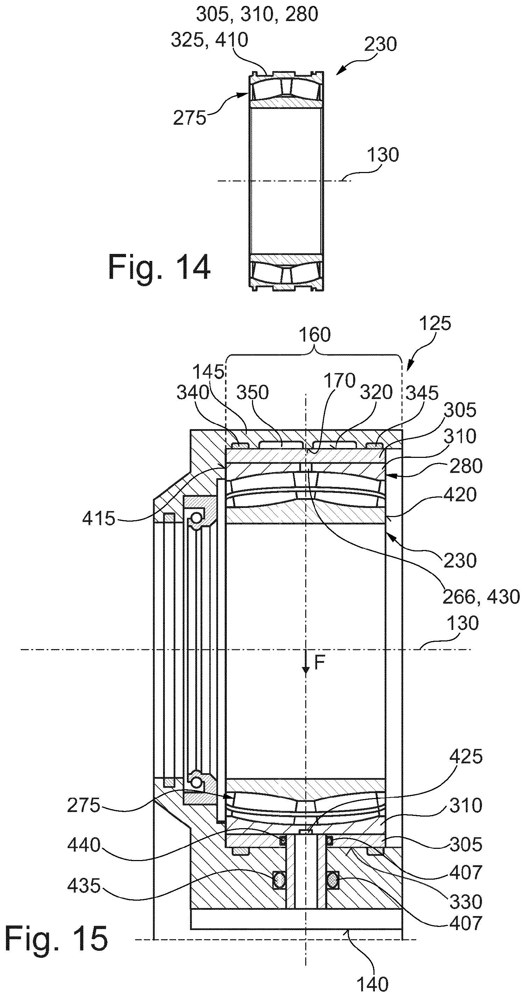

FIG 14 zeigt einen Längsschnitt durch das in den FIGN 13a bis 13c gezeigte Wälzlager 230.

Durch die einstückig und materialeinheitliche Ausgestaltung des Lagerrings 310 und des Zwischenrings 305 ist in radialer Richtung der Wälzlageraußenring 280 besonders dünnwandig ausgebildet, sodass das Stehlager 125 in radialer Richtung besonders kompakt ausgebildet sein kann. Ferner führt die dünnwandige Ausgestaltung dazu, dass der Kühlkanal 325 besonders nahe an der Wälzkörperanordnung 275 und somit nahe an dem Schmiermittel geführt ist. Dadurch können sowohl das Schmiermittel als auch die Wälzkörperanordnung 275 besonders gut mittels des Kühlmittels 410 gekühlt werden.

FIG 15 zeigt eine Schnittansicht entlang der in FIG 4 gezeigten Schnittlinie C-D durch ein Stehlager 125 gemäß einer dritten Ausführungsform.

Das Stehlager 125 ist im Wesentlichen identisch zu der in den FIGN 1 bis 12 gezeigten Ausgestaltung des Stehlagers 125 gemäß der ersten Ausführungsform ausgebildet. Im Folgenden wird ausschließlich auf die Unterschiede des in FIG 15 gezeigten Stehlagers 125 gemäß der dritten Ausführungsform gegenüber dem in den FIGN 1 bis 12 gezeigten Stehlager 125 gemäß der ersten Ausführungsform eingegangen. Aus Übersichtlichkeitsgründen sind in FIG 15 die Rolle 120 sowie der erste Gehäusedeckel 150 nicht dargestellt.

Abweichend gegenüber der in den FIGN 1 bis 12 gezeigten ersten Ausführungsform ist die zweite Stirnseite 420 anstatt der in den FIGN 1 bis 12 gezeigten gestuften Ausgestaltung im Wesentlichen plan ausgebildet, sodass der Lagerring 310 und der Zwischenring 305 bündig an der zweiten Stirnseite 420 abschließen.

In der Ausführungsform in FIG 15 ist der Zwischenring 305 ringförmig ausgebildet, wobei die zweite äußere Umfangsseite 320 im Wesentlichen unterbrechungsfrei ausgeformt ist. In der in FIG 15 gezeigten Ausgestaltung ist der Nutkanal 350 an der ersten inneren Umfangsseite 170 des Stehlagergehäuses 145 im Lagerabschnitt 160 angeordnet. Abweichend dazu ist der Nutkanal 350 radial nach innen hin offen am Stehlagergehäuse 145 ausgebildet. Der Kühlkanal 325 wird dabei radial innenseitig durch die zweite äußere Umfangsseite 320 des Wälzlageraußenrings 280, die zylinderförmig in der Ausführungsform im Wesentlichen ausgebildet ist, begrenzt.

Der Nutkanal 350 kann beispielsweise in das Stehlagergehäuse 145 eingefräst sein. Die Anordnung des Nutkanals 350 hat den Vorteil, dass in der Montage des Wälzlagers 230 in der Lageraufnahme 175 dieses frei in Umfangsrichtung orientiert montiert werden kann. Dadurch ist die Montage des Stehlagers 125 erleichtert.

In der Ausführungsform in FIG 15 ist der Wälzlageraußenring 280 zweiteilig wie in FIG 5 gezeigt durch den Zwischenring 305 und den Lagerring 310 ausgebildet. Selbstverständlich kann der Wälzlageraußenring 280 auch einstückig und materialeinheitlich ausgebildet sein.

Abweichend zu der in den FIGN 1 bis 12 gezeigten Ausgestaltung ist ferner die erste Dichtnut 340 und die zweite Dichtnut 345 in dem Lagerabschnitt 160 angeordnet. Die Dichtnut 340, 345 ist radial nach innen zum Wälzlager 230 hin offen. Dadurch liegt das fünfte und sechste Dichtelement 255, 260 zum einen in der jeweiligen Dichtnut 340, 345 an, aber auch an der zweiten äußeren Umfangsseite 320 des Zwischenrings 305.

Ebenso ist, wie in FIG 15 gezeigt, der Nutkanal 350 im Wesentlichen auf der zur Befestigungsseite 140 abgewandten Seite der Lageraufnahme 175 geführt, sodass im Wesentlichen vollflächig im Abstützbereich 330 der Zwischenring 305 an der zweiten äußeren Umfangsseite 320 und an der ersten inneren Umfangsseite 170 der Lageraufnahme 175 anliegt, um die Lagerkraft F besonders gut abzustützen und jeweils vom Wälzlager 230 über das Stehlagergehäuse 145 an die Befestigungsseite 140 zu übertragen. An der Befestigungsseite 140 wird die Lagerkraft F an dem Segmentrahmen 135 abgestützt.

Es wird darauf hingewiesen, dass das in FIG 15 gezeigte Stehlagergehäuse 145 mit dem Nutkanal 350 mit dem in den FIGN 6 bis 14 gezeigten Wälzlager 230 auch zu kombinieren ist. In diesem Fall ist die Ausrichtung und Ausgestaltung des jeweiligen Nutkanals 350, der sowohl in der zweiten äußeren Umfangsseite 230 des Wälzlagers 230 als auch in der ersten inneren Umfangsseite 170 der Lageraufnahme 175 angeordnet ist, komplementär, sodass die beiden Nutkanäle 350 den Kühlkanal 325 ausformen. Die Dichtnut 340, 345 kann bei dieser Ausgestaltung entweder, wie in den FIGN 6 bis 14 gezeigt, im Wälzlager 230 oder, wie in FIG 15 gezeigt, im Stehlagergehäuse 145 angeordnet sein, um den Kühlkanal 325 abzudichten.

Ist der Nutkanal 350 sowohl im Wälzlager 230 als auch im Stehlagergehäuse 145 angeordnet, so weist der Kühlkanal 325 eine besonders große Querschnittsfläche auf, sodass dadurch eine besonders gute Kühlung des Wälzlagers 230, insbesondere des Schmiermittels des Wälzlagers 230, sichergestellt ist. Ferner ist der radiale Aufbau besonders schlank und kompakt.

Abweichend zu Fig. 3 bis 12 ist beispielsweise das Sicherungsmittel 265 in das Stehlagergehäuse 145 eingeschraubt. Beispielhaft kann das Dichtmittel 407 aus einer Anordnung von das Sicherungsmittel 265 umschließender Dichtringe ausgebildet sein. Der Dichtring kann beispielsweise als O-Ring ausgebildet sein. Dabei ist jeweils ein Dichtring im Stehlagergehäuse 145 und im Wälzlageraußenring 280 an der jeweiligen Durchgangsöffnung 375, 400 in einer dritten und vierten Dichtnut 435, 440 angeordnet.

Ferner kann anstatt der in den FIGN 5 bis 15 gezeigten Ausgestaltung der Deckelabschnitt 165 als getrennter zweiter Gehäusedeckel ausgebildet sein, der ebenso wie der erste Gehäusedeckel 150 axial gegenüberliegend zum ersten Gehäusedeckel 150 an dem Stehlagergehäuse 145, insbesondere am Lagerabschnitt 160, beispielsweise mittels einer Schraubverbindung, reversibel lösbar befestigt ist.

Die in den FIGN 1 bis 15 gezeigte Ausgestaltung des Stehlagers 125 ist besonders einfach in wenigen Herstellungsschritten herstellbar und stellt eine hohe Betriebsfestigkeit auch bei hoher thermischer Belastung, insbesondere in der Stranggießmaschine 20 und/oder der Vorwalzstraße 25 und/oder der Zwischenheizung 45 und/dem Entzunderer 50 und/oder der Fertigwalzstraße 55 und/oder dem Rollentisch 100, bereit.

### Bezugszeichenliste

- 10: Produktionsanlage
- 15: Warmgut
- 20: Stranggießmaschine
- 25: Vorwalzstraße
- 30: erste Trenneinrichtung
- 35: zweite Trenneinrichtung
- 40: dritte Trenneinrichtung
- 45: Zwischenheizung
- 50: Entzunderer
- 55: Fertigwalzstraße
- 60: Kühlstrecke
- 65: Haspeleinrichtung
- 70: Pfanne
- 71: Verteiler
- 75: Kokille
- 80: metallische Schmelze
- 85: Brammenstrang
- 90: Strangführung
- 95: Vorwalzband
- 100: Rollentisch
- 105: Fertigwalzband
- 110: Coil
- 115: Treibergerüst
- 120: Rolle
- 121: Rollfläche
- 125: Stehlager
- 130: Drehachse
- 135: Segmentrahmen
- 140: Befestigungsseite
- 145: Stehlagergehäuse
- 146: erste Anlagefläche
- 147: zweite Anlagefläche
- 150: erster Gehäusedeckel
- 160: Lagerabschnitt
- 165: Deckelabschnitt
- 170: erste innere Umfangsseite
- 175: Lageraufnahme
- 180: erste Absatzfläche
- 185: Absatz
- 190: zweite innere Umfangsseite
- 195: erste Dichtaufnahme
- 200: zweite Dichtaufnahme
- 205: Symmetrieebene
- 210: dritte Dichtaufnahme
- 215: vierte Dichtaufnahme
- 216: dritte innere Umfangsseite
- 220: zweite Absatzfläche
- 225: dritte Absatzfläche
- 229: erste äußere Umfangsseite
- 230: Wälzlager
- 235: erstes Dichtelement
- 240: zweites Dichtelement
- 245: drittes Dichtelement
- 250: viertes Dichtelement
- 255: fünftes Dichtelement
- 260: sechstes Dichtelement
- 261: Kühlkanalsystem
- 265: Sicherungsmittel
- 266: Schmierkanalsystem
- 270: Wälzlagerinnenring
- 275: Wälzkörperanordnung
- 280: Wälzlageraußenring
- 285: vierte innere Umfangsseite
- 286: Lagerabschnitt
- 290: Wälzkörper
- 295: erste Lauffläche
- 300: zweite Lauffläche
- 305: Zwischenring
- 310: Lagerring
- 315: fünfte innere Umfangsseite
- 320: zweite äußere Umfangsseite
- 325: Kühlkanal
- 330: Abstützbereich
- 335: Kühlbereich
- 340: erste Dichtnut
- 345: zweite Dichtnut
- 350: Nutkanal
- 355: erster Nutkanalabschnitt
- 360: zweiter Nutkanalabschnitt
- 365: dritter Nutkanalabschnitt
- 366: vierter Nutkanalabschnitt
- 370: Steg
- 375: erste Durchgangsöffnung
- 380: Zuführkanal
- 385: Rücklaufkanal
- 390: erster Mündungsbereich
- 395: zweiter Mündungsbereich
- 400: zweite Durchgangsöffnung
- 405: Schraube
- 406: Klebeschicht
- 407: Dichtmittel
- 410: Kühlmittel
- 415: erste Stirnseite
- 420: zweite Stirnseite
- 425: Schmierversorgungskanal
- 430: Schmierdurchgangskanal
- 435: dritte Dichtnut
- 440: vierte Dichtnut
- α: erstes Winkelsegment
- β: zweites Winkelsegment
- A1: erste Axialrichtung
- A2: zweite Axialrichtung
- F: Lagerkraft

## Patentansprüche

1. Stehlager (125) zur Lagerung eines langsam laufenden Körpers in einer Produktionsanlage (10), insbesondere einer Stranggießanlage, zur Herstellung eines Warmguts (15), aufweisend
- ein Stehlagergehäuse (145) mit einer Lageraufnahme (175),
- ein Kühlkanalsystem (261) mit wenigstens einem Kühlkanal (325),
- und ein in der Lageraufnahme (175) angeordnetes Wälzlager (230) mit einem Wälzlageraußenring (280),
- wobei die Lageraufnahme (175) eine um die Drehachse (130) umlaufende erste innere Umfangsseite (170) aufweist,
- wobei das Stehlagergehäuse (145) eine erste Anlagefläche (146) aufweist,
- wobei das Stehlagergehäuse (145) ausgebildet ist, eine Lagerkraft (F) aus dem Wälzlageraußenring (280) an die erste Anlagefläche (146) zu übertragen,
- wobei der Kühlkanal (325) sich in Umfangsrichtung um die Drehachse (130) erstreckt und ausgebildet ist, ein in den Kühlkanal (325) zuführbares Kühlmittel (410) zur Kühlung des Wälzlagers (230) und/oder des Stehlagergehäuses (145) zu führen,
**dadurch gekennzeichnet, dass**
- die erste innere Umfangsseite (170) der Lageraufnahme (175) des Stehlagergehäuses (145) radial außen den Kühlkanal (325) und der Wälzlageraußenring (280) radial innen den Kühlkanal (325) begrenzen.

2. Stehlager (125) nach Anspruch 1,
- wobei der Wälzlageraußenring (280) an einer zweiten äußeren Umfangsseite (320) einen zumindest abschnittsweise sich erstreckenden und in Umfangsrichtung nutförmig ausgebildeten Nutkanal (350) aufweist,
- wobei der Nutkanal (350) radial nach außen offen ausgebildet ist und radial nach innen hin den Kühlkanal (325) begrenzt.

3. Stehlager (125) nach einem der vorhergehenden Ansprüche,
- wobei das Stehlagergehäuse (145) an der ersten inneren Umfangsseite (170) einen zumindest abschnittsweise nutförmig ausgebildeten und sich in Umfangsrichtung erstreckenden Nutkanal (350) aufweist,
- wobei der Nutkanal (350) radial nach innen hin offen ausgebildet ist und radial nach außen hin den Kühlkanal (325) begrenzt.

4. Stehlager (125) nach Anspruch 2 oder 3,
- wobei der Nutkanal (350) zumindest abschnittsweise mäanderförmig oder ringförmig zwischen einer ersten Stirnseite (415) des Wälzlageraußenrings (280) und einer in axialer Richtung gegenüberliegenden zweiten Stirnseite (420) des Wälzlageraußenrings (280) ausgebildet ist.

5. Stehlager (125) nach einem der Ansprüche 2 bis 4,
- wobei der Nutkanal (350) einen ersten Nutkanalabschnitt (355) und einen mit dem ersten Nutkanalabschnitt (355) fluidisch verbundenen zweiten Nutkanalabschnitt (360) aufweist,
- wobei der erste Nutkanalabschnitt (355) sich in Umfangsrichtung um die Drehachse (130) erstreckt,
- wobei der zweite Nutkanalabschnitt (360) sich in Umfangsrichtung axial versetzt zu dem ersten Nutkanalabschnitt (355) um die Drehachse (130) erstreckt,
- wobei der Wälzlageraußenring (280) axial zwischen dem ersten Nutkanalabschnitt (355) und dem zweiten Nutkanalabschnitt (360) einen Steg (370) aufweist,
- wobei der Steg (370) an der ersten inneren Umfangsseite (170) der Lageraufnahme (175) anliegt.

6. Stehlager (125) nach Anspruch 5,
- wobei der Nutkanal (350) einen dritten Nutkanalabschnitt (365) aufweist,
- wobei der erste Nutkanalabschnitt (355) sich in Umfangsrichtung parallel zu dem zweiten Nutkanalabschnitt (360) erstreckt,
- wobei der dritte Nutkanalabschnitt (365) ein umfangsseitiges Ende des ersten Nutkanalabschnitts (355) mit dem zweiten Nutkanalabschnitt (360) verbindet.

7. Stehlager (125) nach einem der vorhergehenden Ansprüche,
- wobei eine zweite äußere Umfangsseite (320) des Wälzlageraußenrings (280) in einen Kühlbereich (335) und einen Abstützbereich (330) aufgeteilt ist,
- wobei der Kühlkanal (325) im Kühlbereich (335) angeordnet ist,
- wobei der Kühlkanal (325) sich über ein vordefiniertes erstes Winkelsegment (α) um die Drehachse (130) an der zweiten äußeren Umfangsseite (320) erstreckt,
- wobei sich in Umfangsrichtung an den Kühlkanal (325) der Abstützbereich (330) anschließt,
- wobei sich der Abstützbereich (330) im Wesentlichen über ein vordefiniertes zweites Winkelsegment (β) erstreckt,
- wobei die zweite äußere Umfangsseite (320) im Abstützbereich (330) im Wesentlichen teilzylinderförmig ausgebildet ist,
- wobei vorzugsweise die erste innere Umfangsseite (170) und die zweite äußere Umfangsseite (320) im Abstützbereich (330) im Wesentlichen vollflächig aneinander liegen,
- wobei die Lagerkraft (F) überwiegend über den Abstützbereich (330) auf das Stehlagergehäuse (145) übertragbar ist,
- wobei die Lagerkraft (F) ausgehend von der Drehachse (130) auf den Abstützbereich (330) gerichtet ist.

8. Stehlager (125) nach Anspruch 7,
- wobei das erste Winkelsegment (α) einen Winkel von wenigstens 140° bis einschließlich 330°, vorzugsweise von wenigstens 180° bis einschließlich 300° um die Drehachse (130) einschließt.

9. Stehlager (125) nach einem der vorhergehenden Ansprüche,
- wobei der Wälzlageraußenring (280) und/oder das Stehlagergehäuse (145) einstückig und materialeinheitlich ausgebildet ist.

10. Stehlager (125) nach einem der Ansprüche 2 bis 9,
- wobei der Wälzlageraußenring (280) einen Zwischenring (305) und einen Lagerring (310) aufweist,
- wobei der Zwischenring (305) hohlzylindrisch um die Drehachse (130) ausgebildet ist und radial innen eine fünfte innere Umfangsseite (315) und radial außen die zweite äußere Umfangsseite (320) aufweist,
- wobei der Lagerring (310) radial innenseitig zu dem Zwischenring (305) angeordnet ist und radial außen an der fünften inneren Umfangsseite (315) des Lagerings (310) anliegt.

11. Stehlager nach Anspruch 10,
- wobei der Zwischenring (305) den sich von der zweiten äußeren Umfangsseite (320) radial in Richtung der fünften inneren Umfangsseite (315) erstreckenden Nutkanal (350) aufweist.

12. Stehlager (125) nach einem der vorhergehenden Ansprüche,
- aufweisend wenigstens ein fünftes Dichtelement (255) und eine an der zweiten äußeren Umfangsseite (320) oder an der ersten inneren Umfangsseite (170) angeordnete erste Dichtnut (340),
- wobei die erste Dichtnut (340) vollständig umlaufend um die Drehachse (130) ausgebildet ist,
- wobei in der ersten Dichtnut (340) zumindest abschnittsweise das fünfte Dichtelement (255) angeordnet ist,
- wobei das fünfte Dichtelement (255) ausgebildet ist, den Kühlkanal (325) fluiddicht abzudichten.

13. Stehlager nach Anspruch 12,
- wobei die erste Dichtnut (340) und der Nutkanal (350) an der ersten inneren Umfangsseite (170) oder in der zweiten äußeren Umfangsseite (320) ausgebildet sind.

14. Stehlager (125) nach einem der vorhergehenden Ansprüche,
- wobei das Kühlkanalsystem (261) einen in dem Stehlagergehäuse (145) angeordneten Zuführkanal (380) und einen in dem Stehlagergehäuse (145) angeordneten Rücklaufkanal (385) aufweist,
- wobei der Zuführkanal (380) und der Rücklaufkanal (385) versetzt zueinander jeweils in dem Kühlkanal (325) münden,
- wobei das Kühlmittel (410) mittels des Zuführkanal (380) in den Kühlkanal (325) zuführbar ist,
- wobei das Kühlmittel (410) mittels des Rücklaufkanals (385) aus dem Kühlkanal (325) abführbar ist.

15. Produktionsanlage (10), insbesondere eine Stranggießanlage, zur Herstellung und/oder Transport eines heißen Warmguts (15), insbesondere eines warmgegossenen Brammenstrangs (85),
- aufweisend ein Stehlager (125) nach einem der vorhergehenden Ansprüche und eine Rolle (120) mit einer umfangsseitig angeordneten Rollfläche (121) zur Führung, Stützung und/oder Umformung des Warmguts (15),
- wobei das Wälzlager (230) die Rolle (120) drehbar um die Drehachse (130) lagert.

## Claims

1. Pedestal bearing (125) for bearing a slowly running body in a production plant (10), in particular a continuous casting plant, for producing a hot-rolled material (15), having
- a pedestal bearing housing (145) having a bearing receptacle (175),
- a cooling duct system (261) with at least one cooling duct (325),
- and a rolling bearing (230) which is disposed in the bearing receptacle (175) and has a rolling bearing outer race (280),
- wherein the bearing receptacle (175) has a first inner circumferential side (170) encircling the rotation axis (130),
- wherein the pedestal bearing housing (145) has a first contact face (146),
- wherein the pedestal bearing housing (145) is designed to transfer a bearing force (F) from the rolling bearing outer race (280) to the first contact face (146),
- wherein the cooling duct (325) extends in the circumferential direction about the rotation axis (130) and is designed to guide a coolant (410) which is able to be fed into the cooling duct (325) for cooling the rolling bearing (230) and/or the pedestal bearing housing (145),
**characterized in that**
- the first inner circumferential side (170) of the bearing receptacle (175) of the pedestal bearing housing (145) delimits the cooling duct (325) radially outside, and the rolling bearing outer race (280) delimits the cooling duct (325) radially inside.

2. Pedestal bearing (125) according to Claim 1,
- wherein the rolling bearing outer race (280) on a second outer circumferential side (320) has a groove channel (350) which extends at least in portions and is designed to be groove-shaped in the circumferential direction,
- wherein the groove channel (350) is designed to be radially outwardly open, and radially inwardly delimits the cooling duct (325).

3. Pedestal bearing (125) according to one of the preceding claims,
- wherein the pedestal bearing housing (145) on the first inner circumferential side (170) has a groove channel (350) which is designed to be groove-shaped at least in portions and extends in the circumferential direction,
- wherein the groove channel (350) is designed to be radially inwardly open, and radially outwardly delimits the cooling duct (325).

4. Pedestal bearing (125) according to Claim 2 or 3,
- wherein the groove channel (350) is at least in portions designed to be meandering or annular between a first end side (415) of the rolling bearing outer race (280) and a second end side (420) of the rolling bearing outer race (280) that is opposite in the axial direction.

5. Pedestal bearing (125) according to one of Claims 2 to 4,
- wherein the groove channel (350) has a first groove channel portion (355) and a second groove channel portion (360) fluidically connected to the first groove channel portion (355),
- wherein the first groove channel portion (355) extends in the circumferential direction about the rotation axis (130),
- wherein the second groove channel portion (360) extends in the circumferential direction about the rotation axis (130) so as to be axially offset from the first groove channel portion (355),
- wherein the rolling bearing outer race (280) axially between the first groove channel portion (355) and the second groove channel portion (360) has a web (370),
- wherein the web (370) rests against the first inner circumferential side (170) of the bearing receptacle (175).

6. Pedestal bearing (125) according to Claim 5,
- wherein the groove channel (350) has a third groove channel portion (365),
- wherein the first groove channel portion (355) extends in the circumferential direction parallel to the second groove channel portion (360),
- wherein the third groove channel portion (365) connects a circumferential end of the first groove channel portion (355) to the second groove channel portion (360).

7. Pedestal bearing (125) according to one of the preceding claims,
- wherein a second outer circumferential side (320) of the rolling bearing outer race (280) is divided into a cooling region (335) and a supporting region (330),
- wherein the cooling duct (325) is disposed in the cooling region (335),
- wherein the cooling duct (325) extends over a predefined first angular segment (α) about the rotation axis (130) on the second outer circumferential side (320),
- wherein the supporting region (330) adjoins the cooling duct (325) in the circumferential direction,
- wherein the supporting region (330) extends substantially over a predefined second angular segment (β),
- wherein the second outer circumferential side (320) in the supporting region (330) is designed to be substantially partially cylindrical,
- wherein preferably the first inner circumferential side (170) and the second outer circumferential side (320) in the supporting region (330) rest against one another across substantially the entire area,
- wherein the bearing force (F) is able to be transmitted predominantly via the supporting region (330) to the pedestal bearing housing (145),
- wherein the bearing force (F) is directed so as to proceed from the rotation axis (130) to the supporting region (330).

8. Pedestal bearing (125) according to Claim 7,
- wherein the first angular segment (α) includes an angle of at least 140° to including 330°, preferably from at least 180° to including 300°, about the rotation axis (130).

9. Pedestal bearing (125) according to one of the preceding claims,
- wherein the rolling bearing outer race (280) and/or the pedestal bearing housing (145) are designed in one piece and in a materially integral manner.

10. Pedestal bearing (125) according to one of Claims 2 to 9,
- wherein the rolling bearing outer race (280) has an intermediate ring (305) and a bearing ring (310),
- wherein the intermediate ring (305) is formed so as to be hollow-cylindrical about the rotation axis (130) and radially inside has a fifth inner circumferential side (315) and radially outside has the second outer circumferential side (320),
- wherein the bearing ring (310) is disposed radially inside the intermediate ring (305) and radially outside rests against the fifth inner circumferential side (315) of the bearing ring (310).

11. Pedestal bearing according to Claim 10,
- wherein the intermediate ring (305) has the groove channel (350) extending radially from the second outer circumferential side (320) in the direction of the fifth inner circumferential side (315).

12. Pedestal bearing (125) according to one of the preceding claims,
- having at least one fifth sealing element (255) and a first sealing groove (340) disposed on the second outer circumferential side (320) or on the first inner circumferential side (170),
- wherein the first sealing groove (340) is designed to completely encircle the rotation axis (130),
- wherein the fifth sealing element (255) is at least in portions disposed in the first sealing groove (340),
- wherein the fifth sealing element (255) is designed to seal the cooling duct (325) in a fluid-tight manner.

13. Pedestal bearing according to Claim 12,
- wherein the first sealing groove (340) and the groove channel (350) are formed on the first inner circumferential side (170) or in the second outer circumferential side (320).

14. Pedestal bearing (125) according to one of the preceding claims,
- wherein the cooling duct system (261) comprises a feed duct (380) disposed in the pedestal bearing housing (145) and a return duct (385) disposed in the pedestal bearing housing (145),
- wherein the feed duct (380) and the return duct (385) each end in the cooling duct (325) in a mutually offset manner,
- wherein the coolant (410) is able to be fed into the cooling duct (325) by means of the feed duct (380),
- wherein the coolant (410) is able to be discharged from the cooling duct (325) by means of the return duct (385).

15. Production plant (10), in particular a continuous casting plant, for producing and/or transporting hot-rolled material (15), in particular a hot-cast slab strand (85),
- having a pedestal bearing (125) according to one of the preceding claims, and a roller (120) having a circumferentially disposed rolling surface (121) for guiding, supporting and/or forming the hot-rolled material (15),
- wherein the rolling bearing (230) supports the roller (120) so as to be rotatable about the rotation axis (130).

## Revendications

1. Support de palier (125) pour loger un corps à déplacement lent dans une installation de production (10), plus particulièrement une installation de coulée continue, pour la fabrication d'un produit à chaud (15), présentant :
- un logement de support de palier (145) avec un logement de support (175),
- un système de canaux de refroidissement (261) avec au moins un canal de refroidissement (325),
- et un palier à roulement (230) disposé dans le logement de palier (175) avec une bague extérieure de palier à roulement (280),
- dans lequel le logement de palier (175) présente une première face périphérique interne (170) entourant l'axe de rotation (130),
- dans lequel le logement de support de palier (145) présente une première surface d'appui (146),
- dans lequel le logement de support de palier (145) est conçu pour transmettre une force de palier (F) de la bague extérieure de palier de roulement (280) à la première surface d'appui (146),
- dans lequel le canal de refroidissement (325) s'étend dans le sens circonférentiel autour de l'axe de rotation (130) et est conçu pour acheminer un agent de refroidissement (410) pouvant être acheminé dans le canal de refroidissement (325) pour refroidir le palier à roulement (230) et/ou le logement de support de palier (145),
**caractérisé en ce que**
- la première face périphérique interne (170) du logement de palier (175) du logement de support de palier (145) délimite radialement à l'extérieur le canal de refroidissement (325) et la bague extérieure de palier à roulement (280) délimite radialement à l'intérieur le canal de refroidissement (325).

2. Support de palier (125) selon la revendication 1,
- dans lequel la bague extérieure de palier à roulement (280) présente à une deuxième face périphérique externe (320) un canal à rainure (350) s'étendant au moins par sections et conçu en forme de rainure dans le sens circonférentiel,
- dans lequel le canal à rainure (350) est conçu radialement ouvert vers l'extérieur et délimite radialement vers l'intérieur le canal de refroidissement (325).

3. Support de palier (125) selon l'une des revendications précédentes,
- dans lequel le logement de support de palier (145) présente à la première face périphérique interne (170) un canal à rainure (350) conçu au moins par sections en forme de rainure et s'étendant dans le sens circonférentiel,
- dans lequel le canal à rainure (350) est conçu radialement ouvert vers l'intérieur et délimite radialement vers l'extérieur le canal de refroidissement (325).

4. Support de palier (125) selon la revendication 2 ou 3,
- dans lequel le canal à rainure (350) est conçu au moins par sections en forme de méandres ou en forme d'anneau entre un premier côté frontal (415) de la bague extérieure de palier à roulement (280) et un deuxième côté frontal (420), opposé dans le sens axial, de la bague extérieure de palier à roulement (280).

5. Support de palier (125) selon l'une des revendications 2 à 4,
- dans lequel le canal à rainure (350) présente une première section de canal à rainure (355) et une deuxième section de canal à rainure (360) reliée de manière fluidique à la première section de canal à rainure (355),
- dans lequel la première section de canal à rainure (355) s'étend dans le sens circonférentiel autour de l'axe de rotation (130),
- dans lequel la deuxième section de canal à rainure (360) s'étend dans le sens circonférentiel en étant axialement décalée par rapport à la première section de canal à rainure (355) autour de l'axe de rotation (130),
- dans lequel la bague extérieure de palier à roulement (280) présente une entretoise (370) entre la première section de canal à rainure (355) et la deuxième section de canal à rainure (360),
- dans lequel l'entretoise (370) est adjacente à la première face périphérique interne (170) du logement de palier (175).

6. Support de palier (125) selon la revendication 5,
- dans lequel le canal à rainure (350) présente une troisième section de canal à rainure (365),
- dans lequel la première section de canal à rainure (355) s'étend dans le sens circonférentiel parallèlement à la deuxième section de canal à rainure (360),
- dans lequel la troisième section de canal à rainure (365) relie une extrémité périphérique de la première section de canal à rainure (355) à la deuxième section de canal à rainure (360).

7. Support de palier (125) selon l'une des revendications précédentes,
- dans lequel une deuxième face périphérique externe (320) de la bague extérieure de palier à roulement (280) est divisée en une zone de refroidissement (335) et une zone d'appui (330),
- dans lequel le canal de refroidissement (325) est disposé dans la zone de refroidissement (335),
- dans lequel le canal de refroidissement (325) s'étend sur un premier segment angulaire prédéfini (α) autour de l'axe de rotation (130) à la deuxième face périphérique externe (320),
- dans lequel la zone d'appui (330) se raccorde dans le sens circonférentiel au canal de refroidissement (325),
- dans lequel la zone d'appui (330) s'étend essentiellement sur un deuxième segment angulaire prédéfini (β),
- dans lequel la deuxième face périphérique externe (320) dans la zone d'appui (330) est conçue essentiellement en forme de cylindre partiel,
- dans lequel , de préférence, la première face périphérique interne (170) et la deuxième face périphérique externe (320) dans la zone d'appui (330) sont essentiellement en contact sur toute leur surface,
- dans lequel la force d'appui (F) peut être transmise principalement par la zone d'appui (330) au logement de support de palier (145),
- dans lequel la force d'appui (F) est orientée à partir de l'axe de rotation (130) sur la zone d'appui (330).

8. Support de palier (125) selon la revendication 7,
- dans lequel le premier segment angulaire (α) forme un angle de 140° au moins à 330° inclus, de préférence de 180° au moins à 300° inclus autour de l'axe de rotation (130).

9. Support de palier (125) selon l'une des revendications précédentes,
- dans lequel la bague extérieure de palier à roulement (280) et/ou le logement de support de palier (145) est conçu d'une seule pièce et d'une seule matière.

10. Support de palier (125) selon l'une des revendications 2 à 9,
- dans lequel la bague extérieure de palier à roulement (280) présente une bague intermédiaire (305) et une bague de palier (310),
- dans lequel la bague intermédiaire (305) est conçue sous la forme d'un cylindre creux autour de l'axe de rotation (130) et présente radialement à l'intérieur une cinquième face périphérique interne (315) et radialement à l'extérieur la deuxième face périphérique externe (320),
- dans lequel la bague de palier (310) est disposée radialement à l'intérieur par rapport à la bague intermédiaire (305) et est adjacente radialement à l'extérieur à la cinquième face périphérique interne (315) de la bague de palier (310).

11. Support de palier selon la revendication 10,
- dans lequel la bague intermédiaire (305) présente le canal à rainure (350) s'étendant de la deuxième face périphérique externe (320) radialement dans le sens de la cinquième face périphérique interne (315).

12. Support de palier (125) selon l'une des revendications précédente,
- présentant au moins un cinquième élément d'étanchéité (255) et une première rainure d'étanchéité (340) disposée à la deuxième face périphérique externe (320) ou à la première face périphérique interne (170),
- dans lequel la première rainure d'étanchéité (340) est conçue intégralement périphérique autour de l'axe de rotation (130),
- dans lequel dans la première rainure d'étanchéité (340) est disposé au moins par sections le cinquième élément d'étanchéité (255),
- dans lequel le cinquième élément d'étanchéité (255) est conçu pour rendre étanche d'une manière fluide le canal de refroidissement (325).

13. Support de palier selon la revendication 12,
- dans lequel la première rainure d'étanchéité (340) et le canal à rainure (350) sont conçus à la première face périphérique interne (170) ou dans la deuxième face périphérique externe (320).

14. Support de palier (125) selon l'une des revendications précédentes,
- dans lequel le système de canal de refroidissement (261) présente un canal d'alimentation (380) disposé dans le logement de support de palier (145) et un canal de retour (385) disposé dans le logement de support de palier (145),
- dans lequel le canal d'alimentation (380) et le canal de retour (385) débouchent à chaque fois dans le canal de refroidissement (325) en étant décalés l'un par rapport à l'autre,
- dans lequel l'agent de refroidissement (410) peut être acheminé dans le canal de refroidissement (325) au moyen du canal d'alimentation (380),
- dans lequel l'agent de refroidissement (410) peut être évacué du canal de refroidissement (325) au moyen du canal de retour (385).

15. Installation de production (10), plus particulièrement une installation de coulée continue, pour la fabrication et/ou le transport d'un produit à chaud (15), plus particulièrement d'une ligne de brames coulée à chaud (85),
- présentant un support de palier (125) selon l'une des revendications précédentes et un galet (120) avec une surface de roulement (121) disposée sur la périphérie pour le guidage, le soutien et/ou la déformation du produit à chaud (15),
- dans laquelle le palier à roulement (230) loge le galet (120) d'une manière rotative autour de l'axe de rotation (130).
